(19) **Europäisches Patentamt**
**European Patent Office**
**Office européen des brevets**

(11) **EP 4 592 909 A1**

(12) **EUROPEAN PATENT APPLICATION**

(43) Date of publication:
30.07.2025 Bulletin 2025/31

(21) Application number: 24220098.8

(22) Date of filing: 16.12.2024

(51) International Patent Classification (IPC):
$G06N\ 10/60^{(2022.01)}$ $G06N\ 10/20^{(2022.01)}$

(52) Cooperative Patent Classification (CPC):
G06N 10/60; G06N 10/20

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 23.01.2024 JP 2024007984

(71) Applicant: FUJITSU LIMITED
Kawasaki-shi, Kanagawa 211-8588 (JP)

(72) Inventor: Kanasugi, Shota
Kawasaki-shi, Kanagawa, 211-8588 (JP)

(74) Representative: Hoffmann Eitle
Patent- und Rechtsanwälte PartmbB
Arabellastraße 30
81925 München (DE)

(54) **COMPUTER-READABLE RECORDING MEDIUM STORING INFORMATION PROCESSING PROGRAM, INFORMATION PROCESSING METHOD, AND INFORMATION PROCESSING DEVICE**

(57) An information processing program causing a computer to execute: acquiring a first quantum circuit expressing an action of a time evolution operator regarding a target problem, a second quantum circuit having parameters and a smaller number of quantum gates than the first quantum circuit, and a third quantum circuit defining one or more quantum states being a part of quantum states regarding the target problem, in which each of the first, second, and third quantum circuits has a first size; creating first, second, and third local circuits each having a second size, by respectively reducing sizes of the first, second, and third quantum circuits to the second size smaller than the first size; calculating solutions of the parameters, so as to minimize a value of a cost function for each quantum state; and setting a quantum circuit expressing the action of the time evolution operator.

FIG. 1

**Description**

FIELD

The present embodiment discussed herein is related to an information processing program, an information processing method, and an information processing device.

BACKGROUND

Typically, in a field such as material development or drug discovery, when quantum chemical calculation by quantum simulation is executed, a quantum circuit that expresses a predetermined action such as a time evolution operator is created. Here, in order to maintain accuracy of the quantum chemical calculation, it is desirable to reduce the number of times of operations of the quantum circuit. For example, in a case where the number of times of operations of the quantum circuit is large because the number of quantum gates is large, errors generated in a qubit, caused by environmental noise, interference of another qubit, noise at the time of operating the qubit, or the like may be accumulated for each quantum gate.

As related art, for example, there is a technology for generating a plurality of second quantum gates regarding two qubits that is functionally equivalent to a plurality of first quantum gates regarding two qubits. Furthermore, for example, there is a technology for generating a shortened quantum circuit so that a probability distribution obtained in a case where quantum calculation by the shortened quantum circuit is executed on a plurality of qubits approximates a probability distribution obtained in a case where quantum calculation by a reference quantum circuit is executed on a plurality of qubits. Furthermore, for example, there is a technology for removing a qubit operated by a Pauli operator of a first single qubit and a qubit operated by a Pauli operator of a second single qubit. Furthermore, for example, there is a technology for randomizing terms of a Hamiltonian.

Japanese Laid-open Patent Publication No. 2022-510394, International Publication Pamphlet No. WO 2022/039183, U.S. Patent Application Publication No. 2018/0053112, and U.S. Patent Application Publication No. 2020/0293936 are disclosed as related art.

SUMMARY

TECHNICAL PROBLEM

However, with the related art, it is difficult to create a quantum circuit that expresses a predetermined action, so as to reduce the number of times of operations. For example, in a case where the quantum circuit that expresses the action of the time evolution operator by the Trotter decomposition method is created, a scale, a depth, or the like of the quantum circuit tends to increase, and there is a case where it is not possible to create the quantum circuit, so as to reduce the number of times of operations. The scale is, for example, the number of quantum gates. The depth is, for example, the number of groups of the quantum gates that can be parallel.

In one aspect, an object of the present embodiment is to create a quantum circuit that expresses a predetermined action, so as to reduce the number of times of operations.

SOLUTION TO PROBLEM

According to an aspect of the embodiments, there is provided an information processing program including instructions which, when executed by a computer, cause the computer to execute processing including: acquiring a first quantum circuit that expresses an action of a time evolution operator regarding a target problem, a second quantum circuit that has a smaller number of quantum gates than the first quantum circuit and includes a plurality of parameters, and a third quantum circuit that defines one or more quantum states that are a part of a plurality of quantum states regarding the target problem, in which each of the first quantum circuit, the second quantum circuit, and the third quantum circuit has a first size; creating a first local circuit, a second local circuit, and a third local circuit, each of which has a second size, by respectively reducing sizes of the acquired first quantum circuit, second quantum circuit, and third quantum circuit to the second size smaller than the first size; calculating solutions of the plurality of parameters, so as to minimize a value of a cost function for each of the one or more quantum states, based on the cost function that is defined by the created third local circuit, sets the plurality of parameters as explanatory variables, and represents a difference between the created first local circuit and second local circuit; and setting a new quantum circuit that expresses the action of the time evolution operator, based on the second quantum circuit and the calculated solutions of the plurality of parameters.

ADVANTAGEOUS EFFECTS OF INVENTION

According to one aspect, it is possible to create a quantum circuit that expresses a predetermined action, so as to reduce the number of times of operations.

BRIEF DESCRIPTION OF DRAWINGS

FIG. 1 is an explanatory diagram illustrating an example of an information processing method according to an embodiment;
FIG. 2 is an explanatory diagram illustrating an example of an information processing system 200;
FIG. 3 is a block diagram illustrating a hardware configuration example of an information processing device 100;
FIG. 4 is a block diagram illustrating a hardware configuration example of a calculation device 201;
FIG. 5 is a block diagram illustrating a functional configuration example of the information processing device 100;
FIG. 6 is an explanatory diagram (part 1) illustrating a first example;
FIG. 7 is an explanatory diagram (part 2) illustrating the first example;
FIG. 8 is an explanatory diagram (part 3) illustrating the first example;
FIG. 9 is an explanatory diagram (part 4) illustrating the first example;
FIG. 10 is an explanatory diagram (part 5) illustrating the first example;
FIG. 11 is a flowchart illustrating an example of an overall processing procedure in the first example;
FIG. 12 is a flowchart illustrating an example of a localization processing procedure in the first example;
FIG. 13 is an explanatory diagram (part 1) illustrating a second example;
FIG. 14 is an explanatory diagram (part 2) illustrating the second example;
FIG. 15 is an explanatory diagram (part 3) illustrating the second example;
FIG. 16 is an explanatory diagram (part 4) illustrating the second example;
FIG. 17 is an explanatory diagram (part 5) illustrating the second example;
FIG. 18 is an explanatory diagram (part 6) illustrating the second example;
FIG. 19 is an explanatory diagram (part 7) illustrating the second example;
FIG. 20 is an explanatory diagram (part 8) illustrating the second example; and
FIG. 21 is a flowchart illustrating an example of an overall processing procedure in the second example.

DESCRIPTION OF EMBODIMENTS

Hereinafter, an embodiment of an information processing program, an information processing method, and an information processing device will be described in detail, with reference to the drawings.

(One Example of Information Processing Method According to Embodiment)

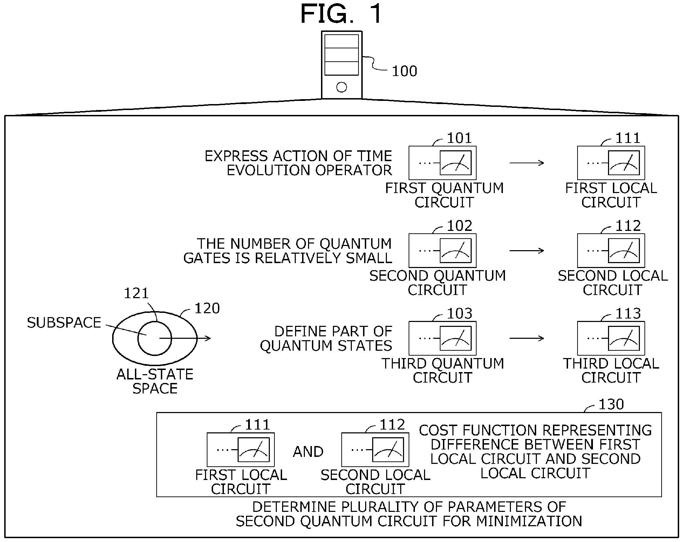

FIG. 1 is an explanatory diagram illustrating an example of an information processing method according to an embodiment. An information processing device 100 is a computer that creates a quantum circuit that expresses a predetermined action. The information processing device 100 is, for example, a server, a Personal Computer (PC), or the like. The predetermined action is, for example, an action of a time evolution operator.

Typically, in a field such as material development or drug discovery, when specific calculation processing such as quantum chemical calculation or material physical property calculation by quantum simulation is executed, the quantum circuit that expresses the predetermined action such as the time evolution operator is created. Here, in order to maintain accuracy of the specific calculation processing, it is desirable to reduce the number of times of operations of the quantum circuit. The operation is, for example, an operation on a qubit.

For example, the number of times of operations of the quantum circuit depends on a scale, a depth, or the like of the quantum circuit. The scale is, for example, the number of quantum gates forming the quantum circuit. The depth is, for example, the number of groups of the quantum gates that can be parallel. For example, when the scale of the quantum circuit is large, the number of times of operations of the quantum circuit increases. For example, when the depth of the quantum circuit is large, the number of times of operations of the quantum circuit increases, and a calculation time of the quantum circuit increases.

For example, in a case where the number of times of operations of the quantum circuit is large because the scale of the quantum circuit is large and the number of quantum gates is large, errors that have occurred in the qubit accumulate for each quantum gate, and there is a case where it is not possible to maintain the accuracy of the specific calculation processing. The error is caused by environmental noise, interference of another qubit, noise at the time of operating the qubit, or the like. For example, in a case where the number of times of operations of the quantum circuit is large because the depth of the quantum circuit is large, the calculation time of the quantum circuit increases, it is not possible to satisfy a restriction of a coherence time, and there is a case where it is not possible to maintain the accuracy of the specific calculation processing. The coherence time is a limit time in which a quantum property of a qubit can be maintained. In this way, since it is more difficult to maintain the accuracy of the specific calculation processing as the number of times of operations of the quantum circuit increases, it is desirable to reduce the number of times of operations of the quantum circuit and to make it easier to maintain the accuracy of the specific calculation processing.

In particular, for a quantum computer with a scale of several hundreds of qubits, since it is difficult to correct an error that has occurred in the qubit, it is desirable to reduce the number of times of operations of the quantum circuit and to make it easier to maintain the accuracy of the specific calculation processing. The quantum computer with the scale of several hundreds of qubits is a Noisy Intermediate Scale Quantum Computer (NISQ), an Early-Fault-Tolerant Quantum Computer (FTQC), or the like.

However, typically, it is difficult to create the quantum circuit that expresses the predetermined action, so as to reduce the number of times of operations. For example, in a case where the quantum circuit that expresses the action of the time evolution operator is created by a Trotter decomposition method, the scale, the scale, the depth, or the like of the quantum circuit tends to increase. Therefore, there is a case where it is not possible to create the quantum circuit that expresses the action of the time evolution operator, so as to reduce the number of times of operations.

Furthermore, for example, as a method for creating the quantum circuit that expresses the action of the time evolution operator, there is a Local Variational Quantum Compilation (LVQC). For example, regarding the LVQC, Reference Document 1 can be referred.

Reference Document 1: Mizuta, Kaoru, et al. "Local variational quantum compilation of large-scale hamiltonian dynamics." PRX Quantum 3.4 (2022): 040302.

Here, the LVQC has a problem in that it is difficult to reduce calculation cost required when the quantum circuit that expresses the action of the time evolution operator is created. Furthermore, the LVQC has a problem in that it is difficult to maintain accuracy of simulation, as time elapses, when a long-time dynamics with respect to any quantum state is simulated, using the quantum circuit that expresses the action of the time evolution operator.

Therefore, in the present embodiment, an information processing method capable of creating the quantum circuit that expresses the predetermined action so as to reduce the number of times of operations will be described. According to the information processing method, specifically, it is possible to create the quantum circuit that expresses the predetermined action of the time evolution operator or the like, so as to reduce the scale or the depth of the quantum circuit.

In FIG. 1, the information processing device 100 creates the quantum circuit that expresses the action of the time evolution operator, of which the number of quantum gates is relatively small, to be used when a target problem is solved. The target problem is a problem for executing the specific calculation processing such as the quantum chemical calculation or the material physical property calculation. The target problem includes, for example, a plurality of qubits in order to express a quantum state.

(1-1) The information processing device 100 acquires a first quantum circuit 101, a second quantum circuit 102, and a third quantum circuit 103 each having a first size. The first size indicates a size of a range including all of the plurality of qubits regarding the target problem. The size of the range is defined by the number of qubits.

The first quantum circuit 101 expresses, for example, the action of the time evolution operator regarding the target problem. The first quantum circuit 101 is created, for example, according to the Trotter decomposition method. For example, the second quantum circuit 102 has a smaller number of quantum gates than the first quantum circuit 101 and includes a plurality of parameters. The parameter is, for example, a coefficient set to the quantum gate. The second quantum circuit 102 is created, for example, by a user in advance.

The third quantum circuit 103 defines, for example, one or more quantum states that are a part of a plurality of quantum states regarding the target problem. The plurality of quantum states corresponds to an all-state space 120. The one or more quantum states correspond to a subspace 121, in the all-state space 120. The third quantum circuit 103 is created, for example, by the user in advance.

The information processing device 100 acquires the first quantum circuit 101, by creating the first quantum circuit 101, for example, according to the Trotter decomposition method. The information processing device 100 acquires the second quantum circuit 102, by receiving an input of the second quantum circuit 102, for example, based on a user's operation input. The information processing device 100 acquires the third quantum circuit 103, by receiving an input of the third quantum circuit 103, for example, based on a user's operation input.

(1-2) The information processing device 100 reduces a size of each of the acquired first quantum circuit 101, second quantum circuit 102, and third quantum circuit 103 to a second size. As a result, the information processing device 100 creates a first local circuit 111, a second local circuit 112, and a third local circuit 113, each having the second size.

The second size is smaller than the first size. The second size indicates a size of a range including one or more qubits that are a part of the plurality of qubits regarding the target problem. The size of the range is defined by the number of qubits. The first local circuit 111 corresponds to the first quantum circuit 101. The second local circuit 112 corresponds to the second quantum circuit 102. The third local circuit 113 corresponds to the third quantum circuit 103.

The information processing device 100 acquires, for example, the second size. Specifically, the information processing device 100 acquires the second size, by receiving an input of the second size, based on a user's operation input. For example, the second size may be set by the user in advance. For example, the information processing device 100 specifies one or more qubits included in a range of the second size with reference to the qubit, for each of the plurality of qubits.

For example, the information processing device 100 creates the first local circuit 111, by extracting a quantum gate regarding the specified one or more qubits, of the first quantum circuit 101, with respect to each qubit. Furthermore, for example, the information processing device 100 creates the second local circuit 112, by extracting a quantum gate regarding the specified one or more qubits, of the second quantum circuit 102, with respect to each qubit.

Furthermore, for example, the information processing device 100 creates the third local circuit 113, by extracting a quantum gate regarding the specified one or more qubits, of the third quantum circuit 103, with respect to each qubit. In this way, for example, the information processing device 100 creates a combination of the first local circuit 111, the second local circuit 112, and the third local circuit 113, for each qubit.

(1-3) The information processing device 100 sets a cost function 130 that is defined by the created third local circuit 113, sets the plurality of parameters as explanatory variables, and represents a difference between the created first local circuit 111 and second local circuit 112. For example, the information processing device 100 sets the cost function 130 that represents a difference between the first local circuit 111 and the second local circuit 112 in all of the created combinations.

The information processing device 100 calculates solutions of the plurality of parameters, so as to minimize a value of the set cost function 130, with respect to each of the one or more quantum states defined by the third quantum circuit 103. For example, the information processing device 100 calculates the solutions of the plurality of parameters, by solving an optimization problem for minimizing the value of the set cost function 130, according to a predetermined optimization algorithm.

(1-4) The information processing device 100 sets a new quantum circuit that expresses the action of the time evolution operator, based on the second quantum circuit 102 and the calculated solutions of the plurality of parameters. For example, the information processing device 100 sets the second quantum circuit 102, as the new quantum circuit that expresses the action of the time evolution operator, by setting the calculated solutions of the plurality of parameters, to the quantum gate of the second quantum circuit 102.

As a result, the information processing device 100 can set the quantum circuit that expresses the action of the time evolution operator, so as to reduce the number of quantum gates and to reduce the number of times of operations. For example, the information processing device 100 can set the second quantum circuit 102 that expresses the action of the time evolution operator, so as to reduce the number of quantum gates and to reduce the number of times of operations, than the first quantum circuit 101 created according to the Trotter decomposition method. Therefore, the information processing device 100 can maintain the accuracy of the specific calculation processing, when the specific calculation processing such as the quantum chemical calculation or the material physical property calculation by the quantum simulation is executed, using the quantum circuit that expresses the action of the time evolution operator.

For example, the information processing device 100 can reduce the scale of the quantum circuit that expresses the action of the time evolution operator and can make it more difficult to accumulate the errors occurred in the qubit. For example, the information processing device 100 can reduce the depth of the quantum circuit that expresses the action of the time evolution operator, reduce the calculation time of the quantum circuit, and easily satisfy the restriction of the coherence time. In this way, the information processing device 100 can reduce the number of times of operations of the quantum circuit and easily maintain the accuracy of the specific calculation processing. Therefore, the information processing device 100 can make it easier to execute the specific calculation processing, even with the quantum computer having the scale of several hundred qubits.

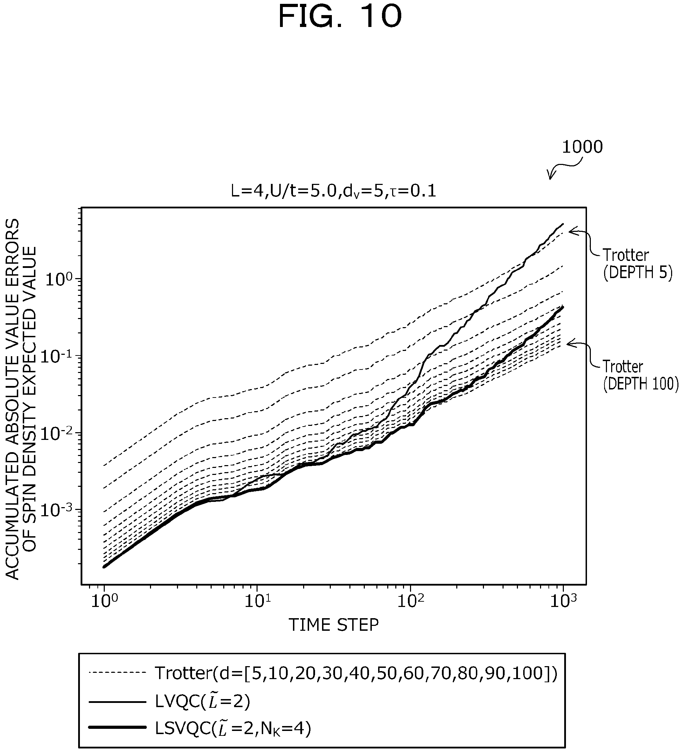

Furthermore, the information processing device 100 can reduce the calculation cost required when the quantum circuit that expresses the action of the time evolution operator is created, as compared with the LVQC. The information processing device 100 can make it easier to maintain the accuracy of the simulation, as time elapses, when the long-time dynamics with respect to any one quantum state is simulated, using the quantum circuit that expresses the action of the time evolution operator, as compared with the LVQC. Specifically, an example in which the method for creating by the quantum circuit that expresses the action of the time evolution operator by the information processing device 100 is compared with the LVQC will be described later with reference to FIG. 10.

Here, a case has been described where the function as the information processing device 100 is implemented by the single computer. However, the present embodiment is not limited to this. For example, the function as the information processing device 100 may be implemented by cooperation of a plurality of computers. For example, there may be a case where the function as the information processing device 100 is implemented on a cloud.

In the following description, the method for creating the quantum circuit that expresses the action of the time evolution operator by the information processing device 100 may be referred to as "Local Subspace Variational Quantum Compilation (LSVQC)".

(Example of Information Processing System 200)

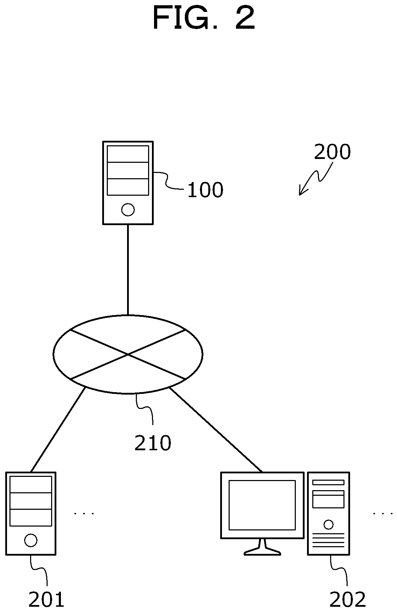

Next, an example of an information processing system 200, to which the information processing device 100 illustrated in FIG. 1 is applied, will be described with reference to FIG. 2.

FIG. 2 is an explanatory diagram illustrating an example of the information processing system 200. In FIG. 2, the information processing system 200 includes the information processing device 100, a calculation device 201, and a client device 202.

In the information processing system 200, the information processing device 100 and the calculation device 201 are coupled via a wired or wireless network 210. The network 210 is, for example, a Local Area Network (LAN), a Wide Area Network (WAN), the Internet, or the like. Furthermore, in the information processing system 200, the information processing device 100 and the client device 202 are coupled via the wired or wireless network 210.

The information processing device 100 is a computer that creates the quantum circuit that expresses the predetermined action of the time evolution operator or the like, so as to reduce the number of times of operations. The information processing device 100 acquires, for example, a processing request for requesting to solve the target problem. The processing request includes, for example, information regarding the target problem. The processing request includes, for example, a definition of the plurality of qubits that expresses the quantum state. Specifically, the information processing device 100 acquires the processing request, by receiving the processing request from another computer. The another computer is, for example, the client device 202 or the like. Specifically, the information processing device 100 acquires the processing request, by receiving an input of the processing request, based on a user's operation input. The information processing device 100 creates the quantum circuit that expresses the action of the time evolution operator, to be used when the target problem is solved, so as to reduce the number of times of operations and reduce the number of quantum gates, in response to the processing request.

Specifically, the information processing device 100 acquires a first quantum circuit, a second quantum circuit, and a third quantum circuit each having the first size. Specifically, the information processing device 100 creates a first local circuit, a second local circuit, and a third local circuit each having the second size, by respectively reducing the sizes of the acquired first quantum circuit, second quantum circuit, and third quantum circuit, to the second size. The information processing device 100 calculates the solutions of the plurality of parameters so as to minimize a value of a cost function is defined by the created third local circuit, sets the plurality of parameters as the explanatory variables, and represents a difference between the created first local circuit and second local circuit. The information processing device 100 sets the new quantum circuit that expresses the action of the time evolution operator, based on the second quantum circuit and the calculated solutions of the plurality of parameters.

The information processing device 100 executes the specific calculation processing to solve the target problem, based on the new quantum circuit that expresses the action of the time evolution operator, in cooperation with the calculation device 201. For example, the information processing device 100 controls the calculation device 201 so as to share all or a part of the specific calculation processing. Specifically, the information processing device 100 controls the calculation device 201, so as to share quantum calculation in the specific calculation processing. As a result, the information processing device 100 can execute the specific calculation processing and solve the target problem, in cooperation with the calculation device 201.

The information processing device 100 may output a result of solving the target problem. For example, the information processing device 100 transmits the result of solving the target problem to another computer. The another computer is, for example, the client device 202 or the like. For example, the information processing device 100 outputs the result of solving the target problem, so that the user can refer to the result. As a result, the information processing device 100 can make the result of solving the target problem be available outside. The information processing device 100 is, for example, a server, a PC, or the like.

The calculation device 201 is a computer that executes the quantum calculation. The calculation device 201 shares all or a part of the specific calculation processing, under control of the information processing device 100. For example, a case is considered where the calculation device 201 is a classical computer that activates the quantum simulator. In this case, the calculation device 201 is, for example, a server, a PC, or the like. Furthermore, for example, a case is considered where the calculation device 201 is an actual machine of the quantum computer.

The client device 202 is a computer used by the user who desires to execute the specific calculation processing. The client device 202 generates the processing request for requesting to solve the target problem, based on a user's operation input and transmits the processing request to the information processing device 100. The client device 202 receives the result of solving the target problem, from the information processing device 100. The client device 202 outputs the result of solving the target problem, so that the user can refer to the result. The client device 202 is, for example, a PC, a tablet terminal, a smartphone, or the like.

Here, a case has been described where the information processing device 100 and the calculation device 201 are different devices. However, the present embodiment is not limited to this. For example, there may be a case where the information processing device 100 has a function as the calculation device 201 and also operates as the calculation device 201. Furthermore, a case has been described where the information processing device 100 and the client device 202 are different devices. However, the present embodiment is not limited to this. For example, there may be a case where the information processing device 100 has a function as the client device 202 and also operates as the client device 202.

(Hardware Configuration Example of Information Processing Device 100)

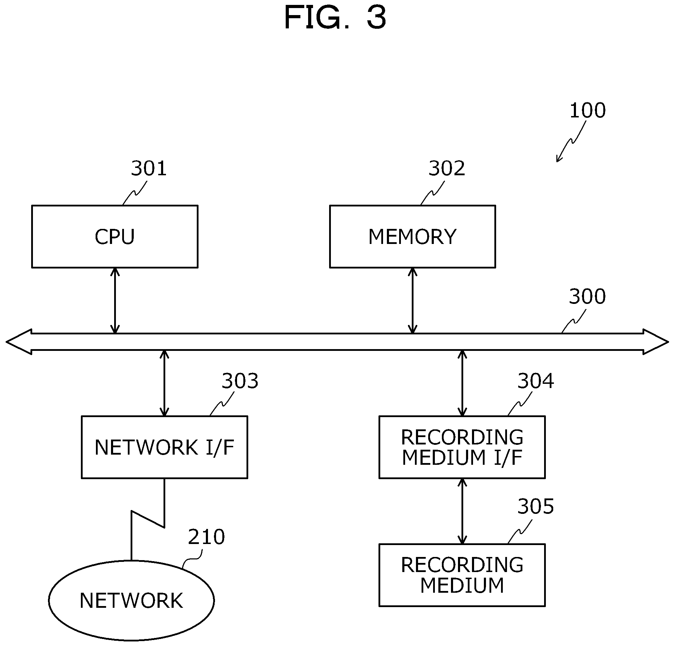

Next, a hardware configuration example of the information processing device 100 will be described with reference to FIG. 3.

FIG. 3 is a block diagram illustrating the hardware configuration example of the information processing device 100. In FIG. 3, the information processing device 100 includes a Central Processing Unit (CPU) 301, a memory 302, a network Interface (I/F) 303, a recording medium I/F 304, and a recording medium 305. Furthermore, the components are coupled to each other by a bus 300.

Here, the CPU 301 performs overall control of the information processing device 100. The memory 302 includes, for example, a Read Only Memory (ROM), a Random Access Memory (RAM), a flash ROM, and the like. Specifically, for example, the flash ROM or the ROM stores various programs, and the RAM is used as a work area for the CPU 301. The programs stored in the memory 302 are loaded into the CPU 301 to cause the CPU 301 to execute coded processing.

The network I/F 303 is coupled to the network 210 through a communication line, and is coupled to another computer through the network 210. Then, the network I/F 303 takes control of an interface between the network 210 and the inside, and controls input and output of data to and from the another computer. The network I/F 303 is, for example, a modem, a LAN adapter, and the like.

The recording medium I/F 304 controls reading and writing of data from and to the recording medium 305 under the control of the CPU 301. The recording medium I/F 304 is, for example, a disk drive, a Solid State Drive (SSD), a Universal Serial Bus (USB) port, or the like. The recording medium 305 is a nonvolatile memory that stores data written under control of the recording medium I/F 304. The recording medium 305 is, for example, a disk, a semiconductor memory, a USB memory, or the like. The recording medium 305 may also be attachable to and detachable from the information processing device 100.

For example, the information processing device 100 may also include a keyboard, a mouse, a display, a printer, a scanner, a microphone, a speaker, or the like in addition to the components described above. Furthermore, the information processing device 100 may include a plurality of the recording medium I/Fs 304 and a plurality of the recording media 305. Furthermore, the information processing device 100 does not need to include the recording medium I/F 304 or the recording medium 305.

(Hardware Configuration Example of Calculation Device 201)

Since a hardware configuration example of the calculation device 201 in a case where the calculation device 201 is the classical computer that activates the quantum simulator is specifically similar to the hardware configuration example of the information processing device 100 illustrated in FIG. 3, description thereof is omitted.

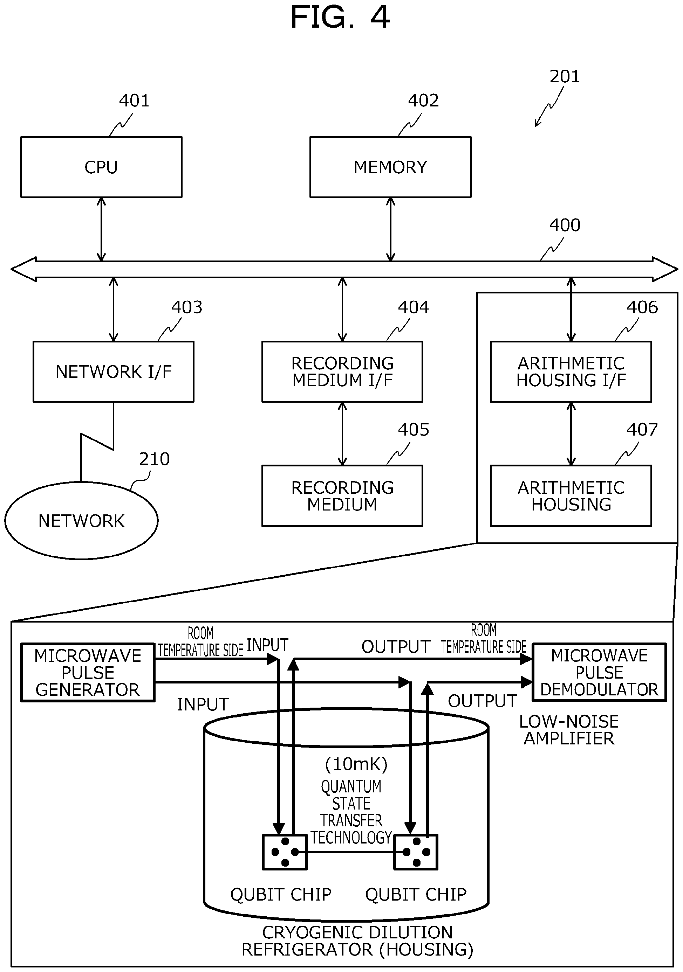

On the other hand, a case is considered where the calculation device 201 is an actual machine of the quantum computer. Here, a hardware configuration example of the calculation device 201 in a case where the calculation device 201 is the actual machine of the quantum computer will be described with reference to FIG. 4.

FIG. 4 is a block diagram illustrating the hardware configuration example of the calculation device 201. In FIG. 4, the calculation device 201 includes a CPU 401, a memory 402, a network I/F 403, a recording medium I/F 404, and a recording medium 405. The calculation device 201 further includes an arithmetic housing I/F 406 and an arithmetic housing 407. Furthermore, the components are coupled to each other by a bus 400.

Here, the CPU 401 performs overall control of the calculation device 201. The memory 402 includes, for example, a ROM, a RAM, a flash ROM, and the like. Specifically, for example, the flash ROM or the ROM stores various programs, and the RAM is used as a work area for the CPU 401. The programs stored in the memory 402 are loaded into the CPU 401 to cause the CPU 401 to execute coded processing.

The network I/F 403 is coupled to the network 210 through a communication line, and is coupled to another computer via the network 210. Then, the network I/F 403 takes control of an interface between the network 210 and the inside, and controls input and output of data to and from the another computer. The network I/F 403 is, for example, a modem, a LAN adapter, or the like.

The recording medium I/F 404 controls reading and writing of data from and to the recording medium 405 under the control of the CPU 401. The recording medium I/F 404 is, for example, a disk drive, an SSD, a USB port, or the like. The recording medium 405 is a nonvolatile memory that stores data written under control of the recording medium I/F 404. The recording medium 405 is, for example, a disk, a semiconductor memory, a USB memory, or the like. The recording medium 405 may be attachable to and detachable from the calculation device 201.

The arithmetic housing I/F 406 controls access to the arithmetic housing 407 under the control of the CPU 401.

The arithmetic housing I/F 406 converts an output signal from the CPU 401 into an input signal to the arithmetic housing 407, using a microwave pulse generator and transmits the input signal to the arithmetic housing 407. The arithmetic housing I/F 406 converts an output signal from the arithmetic housing 407 into an input signal to the CPU 401 using a microwave pulse demodulator and transmits the input signal to the CPU 401. The arithmetic housing 407 is an operation device in which one or more qubit chips cooled to a cryogenic temperature of 10 mK are mounted. The qubit chip represents, for example, a logical qubit. The arithmetic housing 407 uses the one or more qubit chips to perform a predetermined operation in response to an input signal, and outputs an output signal corresponding to a result of performing the predetermined operation.

The calculation device 201 may include, for example, a keyboard, a mouse, a display, a printer, a scanner, a microphone, a speaker, and the like in addition to the components described above. Furthermore, the calculation device 201 may include a plurality of the recording medium I/Fs 404 and a plurality of recording media 405. Furthermore, the calculation device 201 does not need to include the recording medium I/F 404 and the recording medium 405. Furthermore, the qubit chip in the arithmetic housing 407 may be controlled by a method other than the microwaves. The qubit chip in the arithmetic housing 407 may realize, for example, an optical qubit.

(Hardware Configuration Example of Client Device 202)

Specifically, since a hardware configuration example of the client device 202 is similar to the hardware configuration example of the information processing device 100 illustrated in FIG. 3, description thereof will be omitted.

(Functional Configuration Example of Information Processing Device 100)

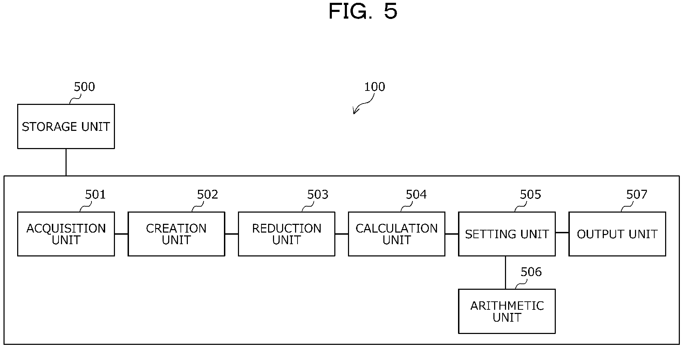

Next, a functional configuration example of the information processing device 100 will be described with reference to FIG. 5.

FIG. 5 is a block diagram illustrating the functional configuration example of the information processing device 100. The information processing device 100 includes a storage unit 500, an acquisition unit 501, a creation unit 502, a reduction unit 503, a calculation unit 504, a setting unit 505, an arithmetic unit 506, and an output unit 507.

For example, the storage unit 500 is implemented by a storage region such as the memory 302 or the recording medium 305 illustrated in FIG. 3. Hereinafter, a case will be described where the storage unit 500 is included in the information processing device 100. However, the present embodiment is not limited to this. For example, there may be a case where the storage unit 500 is included in a device different from the information processing device 100, and storage content of the storage unit 500 may be referred from the information processing device 100.

The acquisition unit 501 to the output unit 507 function as examples of a control unit. For example, specifically, the acquisition unit 501 to the output unit 507 implement functions thereof by causing the CPU 301 to execute a program stored in the storage region such as the memory 302 or the recording medium 305 illustrated in FIG. 3 or by the network I/F 303. A processing result of each functional unit is stored in, for example, the storage region such as the memory 302 or the recording medium 305 illustrated in FIG. 3.

The storage unit 500 stores various types of information to be referred to or updated in processing of each functional unit. The storage unit 500 stores, for example, the information regarding the target problem. The target problem is, for example, a problem for executing the specific calculation processing such as the quantum chemical calculation or the material physical property calculation. The target problem includes, for example, a plurality of qubits in order to express a quantum state. The information regarding the target problem includes, for example, a definition of the plurality of quantum states regarding the target problem, or the like.

Specifically, the storage unit 500 includes the definition of the plurality of qubits regarding the target problem. The definition includes, for example, an index of the qubit. The definition includes, for example, the first size. The first size indicates a size of a range including all of the plurality of qubits. The size of the range is defined by the number of qubits. The information regarding the target problem is, for example, acquired by the acquisition unit 501 and stored in the storage unit 500.

The storage unit 500 stores, for example, the quantum circuit having the first size. The quantum circuit having the first size means a quantum circuit that performs an operation on the plurality of qubits included in the range corresponding to the first size.

Specifically, the storage unit 500 stores the first quantum circuit having the first size. The first quantum circuit expresses, for example, the action of the time evolution operator regarding the target problem. The first quantum circuit is created by the creation unit 502 and is stored in the storage unit 500, for example, according to the Trotter decomposition method. The first quantum circuit may be, for example, acquired by the acquisition unit 501 and stored in the storage unit 500. The first quantum circuit may be created by the user in advance and stored in the storage unit 500.

Specifically, the storage unit 500 stores the second quantum circuit having the first size. For example, the second quantum circuit has a smaller number of quantum gates than the first quantum circuit and includes the plurality of parameters. The parameter is, for example, a coefficient set to the quantum gate. The second quantum circuit is, for example, acquired by the acquisition unit 501 and stored in the storage unit 500. The second quantum circuit may be, for example, created by the user in advance and stored in the storage unit 500.

Specifically, the storage unit 500 stores the third quantum circuit having the first size. For example, the third quantum circuit defines one or more quantum states that are a part of the plurality of quantum states regarding the target problem. The one or more quantum states are linearly independent from and non-orthogonal to each other. The third quantum circuit is, for example, created by the user in advance. The third quantum circuit is, for example, acquired by the acquisition unit 501 and stored in the storage unit 500. The third quantum circuit may be, for example, created by the user in advance and stored in the storage unit 500.

The storage unit 500 stores, for example, the second size smaller than the first size. The second size is, for example, acquired by the acquisition unit 501 and stored in the storage unit 500. The second size may be, for example, designated by the user in advance and stored in the storage unit 500.

The storage unit 500 stores, for example, a quantum circuit having the second size. The second size indicates a size of a range including a part of the plurality of qubits regarding the target problem. The size of the range is defined by the number of qubits. The quantum circuit having the second size means a quantum circuit that performs an operation on one or more qubits included in the range corresponding to the second size.

Specifically, the storage unit 500 stores the first local circuit having the second size. The first local circuit corresponds to the first quantum circuit. The first local circuit is, for example, created by reducing the size of the first quantum circuit to the second size. The first local circuit is, for example, created by the reduction unit 503 and stored in the storage unit 500.

Specifically, the storage unit 500 stores the second local circuit having the second size. The second local circuit corresponds to the second quantum circuit. The second local circuit is, for example, created by reducing the size of the second quantum circuit to the second size. The second local circuit is, for example, created by the reduction unit 503 and stored in the storage unit 500.

Specifically, the storage unit 500 stores the third local circuit having the second size. The third local circuit corresponds to the third quantum circuit. The third local circuit is, for example, created by reducing the size of the third quantum circuit to the second size. The third local circuit is, for example, created by the reduction unit 503 and stored in the storage unit 500.

The acquisition unit 501 acquires various types of information to be used for processing of each functional unit. The acquisition unit 501 stores the acquired various types of information in the storage unit 500, or outputs the acquired various types of information to each functional unit. Furthermore, the acquisition unit 501 may output the various types of information stored in the storage unit 500 to each functional unit. The acquisition unit 501 obtains the various types of information based on, for example, a user's operation input. The acquisition unit 501 may receive various types of information from, for example, a device different from the information processing device 100.

The acquisition unit 501 acquires, for example, the processing request. The processing request requests to create the quantum circuit that expresses the action of the time evolution operator, to be used when the target problem is solved. The processing request may further request to solve the target problem, for example. The processing request includes, for example, the information regarding the target problem.

Specifically, the acquisition unit 501 acquires the processing request, by receiving an input of the processing request. Specifically, the acquisition unit 501 may acquire the processing request by receiving the processing request from another computer. The another computer is, for example, the client device 202 or the like. The acquisition unit 501 acquires the information regarding the target problem by extracting the information from the processing request.

The acquisition unit 501 acquires, for example, the first quantum circuit. Specifically, the acquisition unit 501 acquires the first quantum circuit, by receiving an input of the first quantum circuit, based on a user's operation input. Specifically, the acquisition unit 501 may acquire the first quantum circuit by receiving the first quantum circuit from another computer. The another computer is, for example, the client device 202 or the like.

The acquisition unit 501 acquires, for example, the second quantum circuit. Specifically, the acquisition unit 501 acquires the second quantum circuit by receiving an input of the second quantum circuit, based on a user's operation input. Specifically, the acquisition unit 501 may acquire the second quantum circuit by receiving the second quantum circuit from another computer. The another computer is, for example, the client device 202 or the like.

The acquisition unit 501 acquires, for example, the third quantum circuit. Specifically, the acquisition unit 501 acquires the third quantum circuit by receiving an input of the third quantum circuit, based on a user's operation input. Specifically, the acquisition unit 501 may acquire the third quantum circuit by receiving the third quantum circuit from another computer. The another computer is, for example, the client device 202 or the like.

The acquisition unit 501 acquires, for example, the second size. Specifically, the acquisition unit 501 acquires the second size by receiving an input of the second size, based on a user's operation input. Specifically, the acquisition unit 501 may acquire the second size by receiving the second size from another computer. The another computer is, for example, the client device 202 or the like.

The acquisition unit 501 may accept a start trigger to start processing of any one of the functional units. The start trigger is, for example, a predetermined operation input by a user. The start trigger may be, for example, reception of predetermined information from another computer. The start trigger may be, for example, output of predetermined information by any one of the functional units. The acquisition unit 501 may accept, for example, acquisition of the processing request as a start trigger to start processing of the creation unit 502, the reduction unit 503, the calculation unit 504, and the setting unit 505.

The creation unit 502 creates the first quantum circuit, for example, according to the Trotter decomposition method. For example, in a case where the acquisition unit 501 does not acquire the first quantum circuit, the creation unit 502 creates the first quantum circuit, according to the Trotter decomposition method. As a result, the creation unit 502 can create the first quantum circuit to be a sample that expresses the action of the time evolution operator. The creation unit 502 can obtain the first quantum circuit serving as a guideline for determining how to set the plurality of parameters, so that the second quantum circuit expresses the action of the time evolution operator.

The reduction unit 503 creates the first local circuit, the second local circuit, and the third local circuit each having the second size, by respectively reducing the sizes of the first quantum circuit, the second quantum circuit, and the third quantum circuit to the second size. For example, the reduction unit 503 reduces the sizes of the first quantum circuit, the second quantum circuit, and the third quantum circuit to the second size that is a predetermined range with reference to each qubit, for each of the plurality of qubits.

Specifically, the reduction unit 503 specifies one or more qubits included in a range of the second size with reference to the qubit, for each of the plurality of qubits. Specifically, the reduction unit 503 creates the first local circuit, by extracting a quantum gate regarding the specified one or more qubits, of the first quantum circuit, for each qubit. Specifically, the reduction unit 503 creates the second local circuit, by extracting a quantum gate regarding the specified one or more qubits, of the second quantum circuit, for each qubit.

Specifically, the reduction unit 503 creates the third local circuit, by extracting a quantum gate regarding the specified one or more qubits, of the third quantum circuit, for each qubit. In this way, specifically, the reduction unit 503 creates a combination of the first local circuit, the second local circuit, and the third local circuit, for each qubit. As a result, the reduction unit 503 can obtain information for defining a partial system cost function, in order to make it possible to substantially optimize a total system cost function representing a difference between the first quantum circuit and the second quantum circuit.

Furthermore, a case is considered where each of the first quantum circuit, the second quantum circuit, and the third quantum circuit has translation symmetry. In this case, for example, the reduction unit 503 may reduce each of the sizes of the first quantum circuit, the second quantum circuit, and the third quantum circuit to the second size that is the predetermined range with reference to any one of the plurality of qubits. Any one qubit is a single qubit selected as a representative, in consideration of the translation symmetry.

In this way, specifically, the reduction unit 503 creates the combination of the first local circuit, the second local circuit, and the third local circuit, for the single qubit selected as a representative. As a result, the reduction unit 503 can obtain the information for defining the partial system cost function, in order to make it possible to substantially optimize the total system cost function representing the difference between the first quantum circuit and the second quantum circuit. Furthermore, the reduction unit 503 can reduce a processing load required for reduction, using the translation symmetry.

The calculation unit 504 sets the partial system cost function that is defined by the third local circuit created by the reduction unit 503, sets the plurality of parameters as the explanatory variables, and sets the partial system cost function that represents the difference between the first local circuit and the second local circuit created by the reduction unit 503. Specifically, the partial system cost function is defined by a local fidelity measured for the third local circuit. For example, the calculation unit 504 sets the partial system cost function that represents the difference between the first local circuit and the second local circuit for all the combinations created by the reduction unit 503. As a result, the calculation unit 504 can obtain a guideline for calculating the solutions of the plurality of parameters, so that the second quantum circuit expresses the action of the time evolution operator, similarly to the first quantum circuit.

The calculation unit 504 calculates the solutions of the plurality of parameters, so as to minimize a value of the set partial system cost function, for each of the one or more quantum states defined by the third quantum circuit. For example, the calculation unit 504 calculates the solutions of the plurality of parameters, by solving an optimization problem for minimizing the value of the set partial system cost function, according to the predetermined optimization algorithm. As a result, the calculation unit 504 can calculate the solutions of the plurality of parameters, so that the second quantum circuit expresses the action of the time evolution operator, similarly to the first quantum circuit.

The setting unit 505 sets a new quantum circuit that expresses the action of the time evolution operator, based on the second quantum circuit and the solutions of the plurality of parameters calculated by the calculation unit 504. For example, the setting unit 505 sets the second quantum circuit as the new quantum circuit that expresses the action of the time evolution operator, by setting the solutions of the plurality of parameters calculated by the calculation unit 504, to the quantum gate of the second quantum circuit. As a result, the setting unit 505 can obtain the new quantum circuit that has a smaller number of quantum gates than the first quantum circuit so as to reduce the number of times of operations and expresses the action of the time evolution operator.

The arithmetic unit 506 may obtain the solution of the target problem, by solving the target problem, using the new quantum circuit that expresses the action of the time evolution operator, set by the setting unit 505. As a result, the arithmetic unit 506 can solve the target problem and execute the specific calculation processing such as quantum chemical calculation or the material physical property calculation.

The output unit 507 outputs a processing result of at least any one of the functional units. Examples of an output format include display on a display, print output to a printer, transmission to an external device by the network I/F 303, or storage to a storage region such as the memory 302 or the recording medium 305. As a result, the output unit 507 may notify a user of the processing result of at least any one of the functional units to improve convenience of the information processing device 100.

For example, the output unit 507 outputs the new quantum circuit that expresses the action of the time evolution operator, set by the setting unit 505. Specifically, the output unit 507 transmits the new quantum circuit to another computer. The another computer is, for example, the calculation device 201, the client device 202, or the like. Specifically, the output unit 507 outputs the new quantum circuit so that the user can refer to the quantum circuit. As a result, the output unit 507 allows the target problem to be solved outside and enables to execute the specific calculation processing such as the quantum chemical calculation or the material physical property calculation.

For example, the output unit 507 may output a result of solving the target problem by the arithmetic unit 506. Specifically, the output unit 507 transmits the result of solving the target problem, to another computer. The another computer is, for example, the client device 202 or the like. Specifically, the output unit 507 outputs the result of solving the target problem so that the user can refer to the result. As a result, the output unit 507 can make the result of solving the target problem be available outside.

Here, a case has been described where the information processing device 100 sets the quantum circuit that expresses the action of the time evolution operator, so as to reduce the number of times of operations. However, the present embodiment is not limited to this. For example, there may be a case where the information processing device 100 sets a quantum circuit that expresses a predetermined action, not limited to the time evolution operator, so as to reduce the number of times of operations. Processing content of each functional unit in a case where the information processing device 100 sets the quantum circuit that expresses the predetermined action will be described below.

For example, the acquisition unit 501 acquires a processing request for requesting to create the quantum circuit that expresses the predetermined action. The predetermined action relates to the target problem, for example. There may be a case where the predetermined action is the action of the time evolution operator. The processing request may further request to solve the target problem, for example. The processing request includes, for example, the information regarding the target problem.

Specifically, the storage unit 500 stores a fourth quantum circuit having the first size. The fourth quantum circuit expresses, for example, the predetermined action. The fourth quantum circuit is, for example, created by the creation unit 502 and stored in the storage unit 500. The fourth quantum circuit may be, for example, acquired by the acquisition unit 501 and stored in the storage unit 500. The fourth quantum circuit may be, for example, created by the user in advance and stored in the storage unit 500.

Specifically, the storage unit 500 stores a fifth quantum circuit having the first size. For example, the fifth quantum circuit has a smaller number of quantum gates than the fourth quantum circuit and includes the plurality of parameters. The fifth quantum circuit is, for example, acquired by the acquisition unit 501 and stored in the storage unit 500. The fifth quantum circuit may be, for example, created by the user in advance and stored in the storage unit 500.

The storage unit 500 stores, for example, a basis vector group. The basis vector group is a group of basis vectors that define each of two or more quantum states that are a part of the plurality of quantum states regarding the target problem. The two or more quantum states are linearly independent from and non-orthogonal to each other. The basis vector group is, for example, acquired by the acquisition unit 501 and stored in the storage unit 500. The basis vector group may be, for example, created by the user in advance and stored in the storage unit 500.

The acquisition unit 501 acquires, for example, the fourth quantum circuit. Specifically, the acquisition unit 501 acquires the fourth quantum circuit by receiving an input of the fourth quantum circuit, based on a user's operation input. Specifically, the acquisition unit 501 may acquire the fourth quantum circuit by receiving the fourth quantum circuit from another computer. The another computer is, for example, the client device 202 or the like.

The acquisition unit 501 acquires, for example, the fifth quantum circuit. Specifically, the acquisition unit 501 acquires the fifth quantum circuit by receiving an input of the fifth quantum circuit, based on a user's operation input. Specifically, the acquisition unit 501 may acquire the fifth quantum circuit by receiving the fifth quantum circuit from another computer. The another computer is, for example, the client device 202 or the like.

The acquisition unit 501 acquires, for example, the basis vector group. Specifically, the acquisition unit 501 acquires the basis vector group, by receiving an input of the basis vector group, based on a user's operation input. Specifically, the acquisition unit 501 may acquire the basis vector group by receiving the basis vector group from another computer. The another computer is, for example, the client device 202 or the like.

The calculation unit 504 sets a total system cost function that is defined by the basis vector group acquired by the acquisition unit 501, sets the plurality of parameters as the explanatory variables, and represents a difference between the fourth quantum circuit and the fifth quantum circuit acquired by the acquisition unit 501. Specifically, the total system cost function is defined by a fidelity for the two or more quantum states, calculated based on the basis vector group. As a result, the calculation unit 504 can obtain a guideline for calculating the solutions of the plurality of parameters, so that the fifth quantum circuit expresses the predetermined action similarly to the fourth quantum circuit.

The calculation unit 504 calculates the solutions of the plurality of parameters, so as to minimize a value of the set total system cost function, for each of the two or more quantum states defined by the basis vector group. For example, the calculation unit 504 calculates the solutions of the plurality of parameters, by solving an optimization problem for minimizing the value of the set total system cost function, according to the predetermined optimization algorithm. As a result, the calculation unit 504 can calculate the solutions of the plurality of parameters, so that the fifth quantum circuit expresses the predetermined action similarly to the fourth quantum circuit.

The setting unit 505 sets a new quantum circuit that expresses the predetermined action, based on the fifth quantum circuit and the solutions of the plurality of parameters calculated by the calculation unit 504. For example, the setting unit 505 sets the fifth quantum circuit, as the new quantum circuit that expresses the predetermined action, by setting the solutions of the plurality of parameters calculated by the calculation unit 504, to a quantum gate of the fifth quantum circuit. As a result, the setting unit 505 can obtain a new quantum circuit that has a smaller number of quantum gates than the fourth quantum circuit so as to reduce the number of times of operations and expresses the predetermined action.

The arithmetic unit 506 may obtain the solution of the target problem, by solving the target problem, using the new quantum circuit that expresses the predetermined action, set by the setting unit 505. As a result, the arithmetic unit 506 can solve the target problem and execute the specific calculation processing such as quantum chemical calculation or the material physical property calculation.

For example, the output unit 507 outputs a new quantum circuit that expresses predetermined action, set by the setting unit 505. Specifically, the output unit 507 transmits the new quantum circuit to another computer. The another computer is, for example, the calculation device 201, the client device 202, or the like. Specifically, the output unit 507 outputs the new quantum circuit so that the user can refer to the quantum circuit. As a result, the output unit 507 can make the quantum circuit that expresses the predetermined action be available outside.

For example, the output unit 507 may output a result of solving the target problem by the arithmetic unit 506. Specifically, the output unit 507 transmits the result of solving the target problem, to another computer. The another computer is, for example, the client device 202 or the like. Specifically, the output unit 507 outputs the result of solving the target problem so that the user can refer to the result. As a result, the output unit 507 can make the result of solving the target problem be available outside.

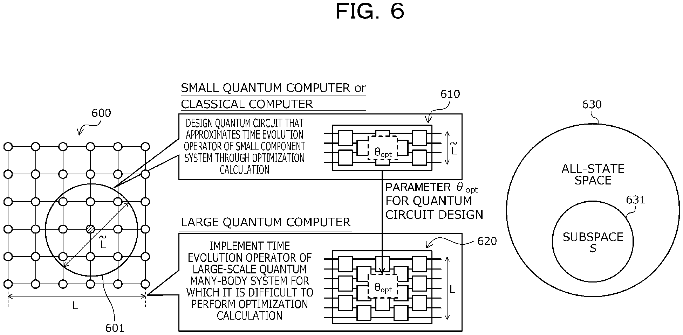

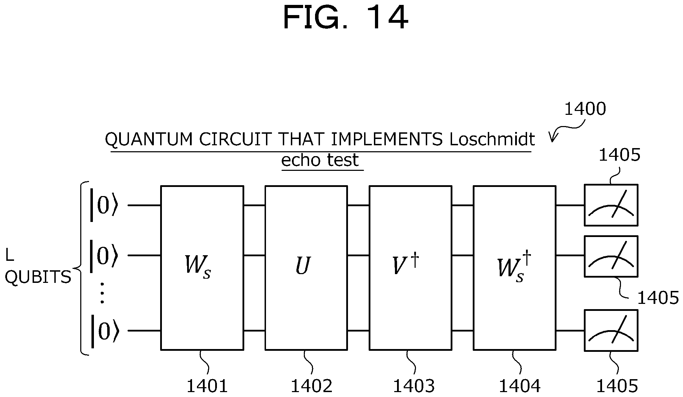

Hereinafter, a specific example in a case where the information processing device 100 sets the quantum circuit that expresses the action of the time evolution operator so as to reduce the number of times of operations will be described as a first example, with reference to FIGs. 6 to 13. Furthermore, a specific example in a case where the information processing device 100 sets the quantum circuit that expresses the predetermined action, not limited to the time evolution operator so as to reduce the number of times of operations will be described as a second example, with reference to FIGs. 14 to 22.

(First Example)

Next, the first example will be described with reference to FIGs. 6 to 10. The first example indicates a specific example in which the information processing device 100 sets the quantum circuit that expresses the action of the time evolution operator, so as to reduce the number of times of operations. FIGs. 6 to 10 are explanatory diagrams illustrating the first example.

Specifically, first, an example of an operation performed by the information processing device 100 in the first example will be described with reference to FIG. 6. In FIG. 6, there is an overall quantum system 600 having a size L regarding the target problem. In the following description, there is a case where a symbol with - attached to an upper portion of a character is written as "(character)~". For example, there is a case where a symbol in which - is attached to an upper portion of L is written as "L~" (may be referred to as "L"). In the following description, there is a case where an arbitrary character to which a superscript is added is referred to as "arbitrary character^superscript". In the following description, there is a case where an arbitrary character to which a subscript is added is referred to as "arbitrary character_subscript".

The information processing device 100 acquires a compilation size L~ ($\leq$ L). The information processing device 100 specifies a subspace 631 including one or more quantum states, in an all-state space 630 regarding the target problem. The information processing device 100 performs optimization calculation on a quantum circuit 610 that expresses the action of the time evolution operator with respect to the subspace 631, in a partial quantum system 601 having a size L~. As a result, the information processing device 100 can implement a quantum circuit 620 that expresses the action of the time evolution operator with respect to the subspace 631, in the overall quantum system 600.

Here, in consideration of physical properties of molecules or the like, even if all the quantum states are not examined, if at least some quantum states are examined, it may be possible to maintain the accuracy of the specific calculation processing such as the quantum chemical calculation or the material physical property calculation. Specifically, even if a quantum state with relatively high energy is not examined, if a quantum state with relatively low energy is examined, it may be possible to maintain the accuracy of the quantum chemical calculation, the material physical property calculation, or the like. Therefore, if the information processing device 100 implements the quantum circuit 620 that expresses the action of the time evolution operator with respect to the subspace 631, in the overall quantum system 600, the information processing device 100 can maintain the accuracy of the quantum chemical calculation, the material physical property calculation, or the like.

In the following description, how the information processing device 100 implements the quantum circuit 620 that expresses the action of the time evolution operator with respect to the subspace 631, in the overall quantum system 600 will be specifically described. In the following description, there is a case where a D_S dimensional subspace 631 is referred to as a "subspace S".

Here, it is assumed that there be an approximate quantum circuit U^(L) for the D_S dimensional subspace S = span (| ψ_1>, ..., | ψ_(P_S)>) in the overall quantum system 600 with the size L. U^(L) is an approximation of a time evolution operator e^(- itH).

Furthermore, it is assumed that there be a variational quantum circuit V^(L) (θ) having a parameter θ, for the D_S dimensional subspace S = span (| ψ_1>, ..., | ψ_(D_S)>) in the overall quantum system 600 with the size L. A total system cost function C_S^(L) (θ) representing a difference between the approximate quantum circuit U^(L) and the variational quantum circuit V^(L) (Θ) is defined by the following formulas (1) and (2). The following formula (1) includes a projection measurement operator for a j-th qubit. The reference tr [] indicates a trace operation. A basis {| ψ_s>} forming the subspace S is a set of quantum states that are linearly independent from and non-orthogonal to each other. Each element | ψ_s> is defined by the following formula (3), using a state preparation circuit W_s^(L).

[Expression 1]

$$C_S^{(L)}(\boldsymbol{\theta}) = 1 - \frac{1}{LD_S} \sum_{j=1}^{L} \sum_{s=1}^{D_S} tr\left[ (|0\rangle\langle 0|_j \otimes I_{\bar{j}}) \rho_s \left( U^{(L)}, V^{(L)}(\boldsymbol{\theta}) \right) \right] \quad \dots (1)$$

[Expression 2]

$$\rho_s\left( U^{(L)}, V^{(L)} \right) = W_s^{(L)\dagger} V^{(L)\dagger} U^{(L)} |\psi_s\rangle\langle\psi_s| U^{(L)\dagger} V^{(L)} W_s^{(L)} \quad \dots (2)$$

[Expression 3]

$$|\psi_s\rangle = W_s^{(L)} |0\rangle^{\otimes L} \quad \dots (3)$$

The fact that the total system cost function C_S^(L) (θ) is zero is a necessary and sufficient condition that the actions of U^(L) and V^(L) (θ) match, with respect to an arbitrary state belonging to the subspace S. In other words, the following formula (4) is a necessary and sufficient condition for the following formula (5).

[Expression 4]

$$C_S^{(L)}(\boldsymbol{\theta}) = 0 \quad \dots (4)$$

[Expression 5]

$$V^{(L)}(\boldsymbol{\theta})|\psi\rangle = e^{i\phi} U^{(L)}|\psi\rangle \text{ for } \forall |\psi\rangle \in S \quad \dots (5)$$

Therefore, it is desirable that the information processing device 100 calculate a parameter θ that defines V^(L) (Θ) of which the action of the time evolution operator matches U^(L), by minimizing the total system cost function C_S^(L) (Θ). Here, as L is larger, it tends to be more difficult to solve the optimization problem for directly minimizing the total system cost function C_S^(L) (Θ). Therefore, in order to substantially minimize the total system cost function C_S^(L) (Θ), it is considered to minimize a partial system cost function C~_S^(L~) (Θ) with respect to the partial quantum system 601 having the size L~ (≤ L). The partial system cost function C~_S^(L~) (Θ) is defined by the following formulas (6) and (7).

[Expression 6]

$$\tilde{C}_S^{(\tilde{L})}(\boldsymbol{\theta}) = 1 - \frac{1}{LD_S} \sum_{j=1}^{L} \sum_{s=1}^{D_S} tr\left[\left(|0\rangle\langle0|_j \otimes I_{\bar{j}}\right)\tilde{\rho}_s\left(U^{(\tilde{L},j)}, V^{(\tilde{L},j)}(\boldsymbol{\theta})\right)\right] \quad ...(6)$$

[Expression 7]

$$\tilde{\rho}_s\left(U^{(\tilde{L},j)}, V^{(\tilde{L},j)}\right) = W_s^{(\tilde{L},j)\dagger} V^{(\tilde{L},j)\dagger} U^{(\tilde{L},j)} W_s^{(\tilde{L},j)} |0\rangle\langle0| W_s^{(\tilde{L},j)\dagger} U^{(\tilde{L},j)\dagger} V^{(\tilde{L},j)} W_s^{(\tilde{L},j)}$$

$$...(7)$$

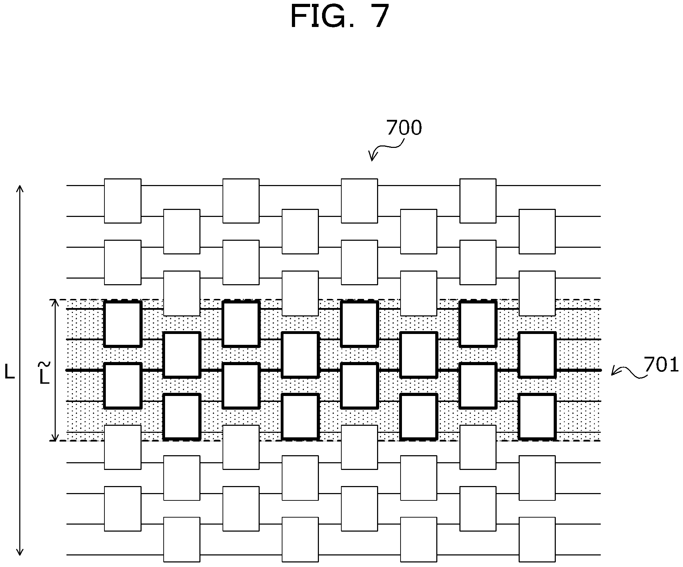

If the partial system cost function C~_S^(L~) (Θ) is minimized by a local compilation theorem, it is possible to indirectly minimize the total system cost function C_S^(L) (θ). U^(L~,j), V^(L~,j) (θ), and {W_s^(L~,j)} are quantum circuits obtained by respectively executing localization processing on U^(L), V^(L) (Θ), and {W_s^(L)}, centered on a site j. An example of the localization processing will be described later with reference to FIG. 7.

Here, the local compilation theorem will be described. For example, a case is considered where the time evolution operator e ^ (- itH) is implemented on the quantum circuit, with respect to a Hamiltonian H of the overall quantum system 600 with the size L. In this case, if there is a Lieb-Robinson bound, an interaction of H is local, and the variational quantum circuit V^(L) (Θ) and the state preparation circuit {W_s^(L)} have local quantum circuit structures, the following formula (8) is satisfied. The references ε and ε_LR indicate values close to zero. Furthermore, a lower limit of L~ is defined by the following formula (9).

[Expression 8]

$$\tilde{C}_S^{(\tilde{L})}(\boldsymbol{\theta}) \leq \varepsilon \Rightarrow C_S^{(L)}(\boldsymbol{\theta}) \leq \varepsilon + \frac{1}{2}\varepsilon_{LR} \quad ...(8)$$

[Expression 9]

$$\tilde{L} \geq \max\left(\frac{c}{2} + 2(d_V + d_W) + 1, c + 2(d_V + 2d_W)\right) \quad ...(9)$$

Here, the reference c is a constant of O (1). The reference d_V is a depth of the variational quantum circuit V^(L) (Θ). The reference d_W is a maximum depth of the state preparation circuit {W_s^(L)}. Furthermore, ε_LR is an error derived from the Lieb-Robinson bound. If L~ is sufficiently large, ε_LR = exp [- O (L~)] asymptotically approaches zero. If the partial system cost function C~_S^(L~) (Θ) with the size L~ is minimized by the above formula (8), it indicates that the total system cost function C_S^(L) (θ) with the size L can be indirectly minimized.

Next, the localization processing will be described with reference to FIG. 7. U^(L~,j), V^(L~,j) (Θ), and {W_s^(L~,j)} are obtained by respectively executing the localization processing on U^(L), V^(L) (Θ), and {W_s^(L)}, centered on the site j. Specifically, the localization processing is to create the local quantum circuit with the size L~, by leaving only a quantum gate that operates a qubit existing in a range 701 of the size L~, centered on the site j, in a quantum circuit 700 with the size L. The site j is a j-th qubit.

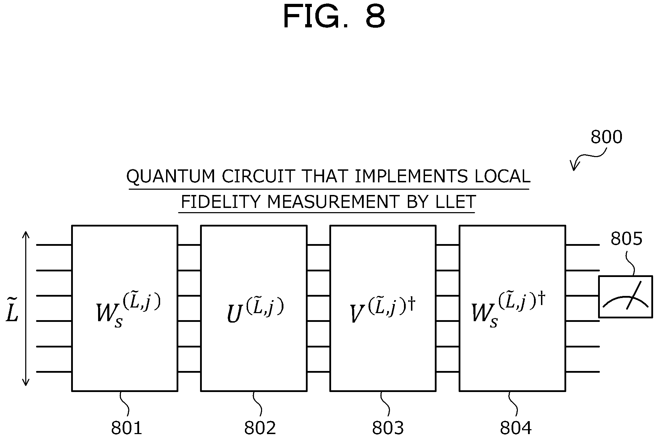

Next, a measurement method for measuring a value of the partial system cost function C~_S^(L~) (Θ) will be described with reference to FIG. 8. Specifically, the value of the partial system cost function C~_S^(L~) (Θ) is defined by the following formula (10), based on the local fidelity. The local fidelity is a term of tr [].

[Expression 10]

$$\tilde{C}_S^{(\tilde{L})}(\boldsymbol{\theta}) = 1 - \frac{1}{LD_S} \sum_{j=1}^{L} \sum_{s=1}^{D_S} tr\left[\left(|0\rangle\langle0|_j \otimes I_{\bar{j}}\right)\tilde{\rho}_s\left(U^{(\tilde{L},j)}, V^{(\tilde{L},j)}(\boldsymbol{\theta})\right)\right] \quad ...(10)$$

Specifically, the local fidelity is obtained by measuring a quantum circuit 800 with the size L~, by executing a Local Loschmidt Echo Test (LLET). The quantum circuit 800 includes a quantum gate 801 corresponding to {W_s^(L~,j)}. The quantum circuit 800 includes a quantum gate 802 corresponding to U^(L~,j). The quantum circuit 800 includes a quantum gate 803 corresponding to V^(L~,j). The quantum circuit 800 includes a quantum gate 804 corresponding to {W_s^((L~,j)†)}. The quantum circuit 800 includes a measurement unit 805. Specifically, since there are L × D_S independent components of the local fidelity, L × D_S times of LLET is executed per shot.

On the other hand, in a case where each of U^(L), V^(L) (θ), {W_s^(L)} has the translation symmetry, there is no dependency of the local fidelity on the site j. Therefore, in this case, the partial system cost function C~_S^(L~) (Θ) may be defined by the following formula (11).
[Expression 11]

$$\tilde{C}_S^{(\tilde{L})}(\boldsymbol{\theta}) = 1 - \frac{1}{D_S}\sum_{s=1}^{D_S} tr\left[(|0\rangle\langle 0|_1 \otimes I_{\bar{1}})\tilde{\rho}_s\left(U^{(\tilde{L},1)}, V^{(\tilde{L},1)}(\boldsymbol{\theta})\right)\right] \quad \dots(11)$$

Furthermore, if the partial system cost function C~_S^(L~) (Θ) is defined by the above formula (11), when D_S times of LLET is executed per shot, the value of the partial system cost function C~_S^(L~) (Θ) can be measured. Therefore, if the partial system cost function C~_S^(L~) (Θ) is defined by the above formula (11), it is possible to reduce a processing load required when the value of the partial system cost function C~_S^(L~) (Θ) is measured.

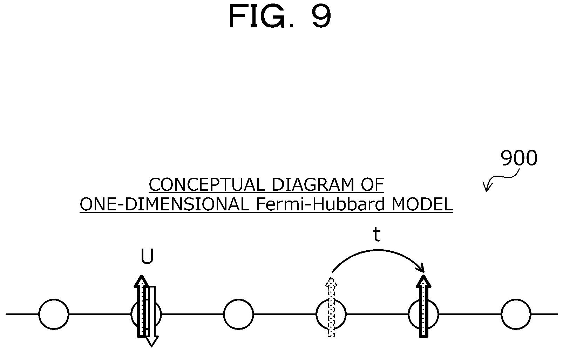

Next, an example in which the LSVQC by the information processing device 100 is applied to quantum simulation of a one-dimensional Fermi-Hubbard model 900 will be described, with reference to FIG. 9. The Hamiltonian H corresponding to the one-dimensional Fermi-Hubbard model 900 is defined by the following formulas (12) and (13). The following formula (12) indicates, for example, electron hopping, electron repulsion, or the like. Here, c_iσ (c_iσ^†) is an annihilation (creation) operator for electrons of a site i and a spin σ. The reference U is an electronic correlation parameter. The reference t is a hopping parameter.
[Expression 12]

$$H = -t\sum_{\langle i,j\rangle}\sum_{\sigma=\uparrow,\downarrow}\left(c_{i\sigma}^\dagger c_{j\sigma} + c_{j\sigma}^\dagger c_{i\sigma}\right) + U\sum_{i=1}^{L} n_{i\uparrow}n_{i\downarrow} \quad \dots(12)$$

[Expression 13]

$$n_{i\sigma} = c_{i\sigma}^\dagger c_{i\sigma} \quad \dots(13)$$

In the following description, it is assumed that the information processing device 100 calculate a dynamics of a spin density of the one-dimensional Fermi-Hubbard model 900. An expected value of the spin density at the site j and a time τ is defined by the following formulas (14) and (15).
[Expression 14]

$$\rho_j^S(\tau) = \langle n_{j\uparrow}(\tau)\rangle - \langle n_{j\downarrow}(\tau)\rangle \quad \dots(14)$$

[Expression 15]

$$\langle n_{j\sigma}(\tau)\rangle = \langle\psi_0|e^{iH\tau}n_{j\sigma}e^{-iH\tau}|\psi_0\rangle \quad \dots(15)$$

When the spin density is calculated, it is sufficient to express the action of the time evolution operator, for the subspace S formed by an input state | ψ_0> and e^(- iHτ) | ψ_0> obtained by time evolving the input state | ψ_0>. Therefore, the information processing device 100 executes the LSVQC on a Krylov subspace S defined by the following formula (16). It is preferable that a dimension N_k be a maximum dimension at which linear independence is maintained. The reference W is an approximate quantum circuit of the time evolution operator at a time τ_K, defined by the following formula (17).
[Expression 16]

$$S = \text{span}\left(\{W^k|\psi_0\rangle\}_{k=0}^{k=N_K}\right) \quad \dots(16)$$

[Expression 17]

$$W \approx e^{-i\tau_K H} \quad \dots(17)$$

For example, a Gaussian localized state is selected as the input state | ψ_0>. The Gaussian localized state | ψ_0> can be efficiently prepared on the quantum computer by the local quantum circuit. The local quantum circuit is, for example, a Givens network circuit. Therefore, an application condition of the LSVQC that the state preparation circuit {W_s^(L)} is the local quantum circuit is satisfied.

Specifically, the information processing device 100 sets the time evolution operator e^(- iHτ) of the L-site Fermi-Hubbard model 900, as a target quantum circuit U^(L), according to the Trotter decomposition method of a depth 100. Specifically, the information processing device 100 sets a Variational Hamiltonian Ansatz (VHA), as the variational quantum circuit V^(L) (Θ). The VHA is defined by the following formula (18). The Hamiltonian H is defined by the following formula (19).

[Expression 18]

$$V^{(L)}(\boldsymbol{\theta}) = \prod_{j=1}^{d_V} \prod_{m=1}^{M} e^{-i\theta_{j,m} H_m^{(L)}} \quad \dots (18)$$

[Expression 19]

$$H = \sum_{m=1}^{M} H_m \; ([H_m, H_{m'}] \neq 0 \; for \; m \neq m') \quad \dots (19)$$

The information processing device 100 calculates the parameter θ that expresses the action of the time evolution operator, based on the set target quantum circuit U^(L) and the set variational quantum circuit V^(L) (Θ). For example, the information processing device 100 executes the localization processing on the target quantum circuit U^(L), the variational quantum circuit V^(L) (Θ), and the state preparation circuit {W_s^(L)} (s = 1 to D_S), with reference to the site j = 1 to L. As a result, the information processing device 100 generates local quantum circuits U^(L~,j), V^(L~,j) (θ), and {W_s^(L~,j)} (j = 1~L).

The information processing device 100 measures the local fidelity by the LLET, for a partial system state set {W_s^(L~,j) | 0>}, with j = 1 to L and s = 1 to D_S. The information processing device 100 calculates a value of the partial system cost function C~_S^(L~) (Θ), based on the measurement result. If the value of the partial system cost function C~_S^(L~) (Θ) is not converged, the information processing device 100 updates the parameter θ, measures the local fidelity by the LLET again, and calculates the value of the partial system cost function C~_S^(L~) (Θ).

If the value of the partial system cost function C~_S^(L~) (Θ) is converged, the information processing device 100 sets the parameter θ as an optimum parameter θ_opt. The information processing device 100 implements the variational quantum circuit V^(L) (Θ) to which the set optimum parameter θ_opt is set, as the quantum circuit that expresses the action of the time evolution operator with respect to a total system with the size L. As a result, the information processing device 100 can implement the VHA that is the quantum circuit that expresses the action of the time evolution operator with respect to the total system with the size L, so as to reduce the number of times of operations.

Next, an example of an effect of the information processing device 100 will be described with reference to FIG. 10. It is assumed that the information processing device 100 implement the VHA by the LSVQC. Here, results of simulating the dynamics of the input state | ψ_0>, respectively by the VHA implemented by the LSVQC, the VHA implemented by the LVQC, and the quantum circuit implemented by the Trotter decomposition method are compared. It is assumed that a lattice size be L = 4 corresponding to eight qubits. It is assumed that a time parameter be τ = 0.1. It is assumed that compilation sizes of the LVQC and the LSVQC be L~ = 2 corresponding to four qubits. It is assumed that the depth of the VHA be five.

A graph 1000 illustrates a change in an accumulated absolute value error of the spin density expected value for a time step. The accumulated absolute value error is, for example, defined by the following formula (20).

[Expression 20]

$$\Delta\rho_j^s(n\tau) = \sum_{k=1}^{n} \left| \rho_j^{s,\text{approx}}(k\tau) - \rho_j^{s,\text{exact}}(k\tau) \right| \quad \dots (20)$$

As illustrated in the graph 1000, the LSVQC can ensure simulation accuracy about the same as the LVQC. Furthermore, the LSVQC can ensure the simulation accuracy about the same as that of the Trotter decomposition method of the depth 100. Furthermore, the LSVQC can reduce the depth of the quantum circuit to 5/100 = 1/20, as compared with the Trotter decomposition method of the depth 100.

Furthermore, when the number of time steps increases, the simulation accuracy of the LVQC deteriorates as compared with the Trotter decomposition method of the depth 5. On the other hand, even if the number of time steps increases, the LSVQC can suppress the deterioration in the simulation accuracy than the LVQC. Furthermore, even if the number of time steps increases, the LSVQC can ensure the simulation accuracy about the same as that of the Trotter decomposition method of the depth 30. The LSVQC can reduce the depth of the quantum circuit to 5/30 = 1/6 as compared with the Trotter decomposition method of the depth 30.

As a result, the LSVQC can maintain the simulation accuracy of the long-time dynamics of the input state $|\psi\_0>$, while reducing the depth of the quantum circuit as compared with the Trotter decomposition method. Since the LSVQC can measure the cost function with a more local gate operation, as compared with the LVQC, the LSVQC can be easily implemented.

In this way, the information processing device 100 can obtain the quantum circuit that expresses the action of the time evolution operator, that enables efficient quantum simulation by the LSVQC. The information processing device 100 can reduce the number of quantum gates prepared for the quantum simulation and the depth of the quantum circuit, by the LSVQC. For example, the information processing device 100 can reduce the depth of the quantum circuit prepared to execute dynamics calculation of the Fermi-Hubbard model 900 to about 1/20, as compared with the Trotter decomposition method. Furthermore, the information processing device 100 can simulate the dynamics with high accuracy across a longer time region than the LVQC.

(Overall Processing Procedure in First Example)

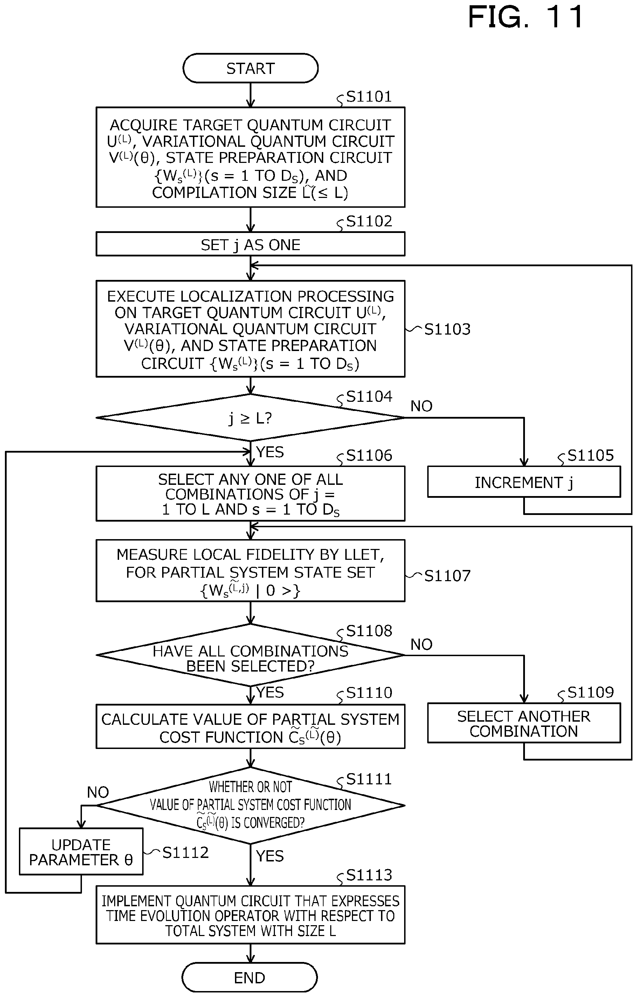

Next, an example of an overall processing procedure in the first example executed by the information processing device 100 will be described with reference to FIG. 11. Overall processing is implemented by, for example, the CPU 301, the storage region such as the memory 302 or the recording medium 305, and the network I/F 303 illustrated in FIG. 3.

FIG. 11 is a flowchart illustrating an example of an overall processing procedure in the first example. In FIG. 11, the information processing device 100 acquires the target quantum circuit U^(L), the variational quantum circuit V^(L) ($\Theta$), the state preparation circuit {W_s^(L)} (s = 1 to D_S), and the compilation size L~ ($\leq$ L) (step S1101).

The information processing device 100 sets j as one (step S1102).

The information processing device 100 executes the localization processing on the target quantum circuit U^(L), the variational quantum circuit V^(L) ($\Theta$), and the state preparation circuit {W_s^(L)} (s = 1 to D_S), with reference to the site j (step S1103). As a result, the information processing device 100 can generate the local quantum circuits U^(L~,j), V^(L~,j) ($\Theta$), and {W_s^(L~,j)} (j = 1 to L).

The information processing device 100 determines whether or not j $\geq$ L (step S1104). Here, in a case where j $\geq$ L is not satisfied (step S1104: No), the information processing device 100 proceeds to processing in step S1105. On the other hand, in a case where j $\geq$ L (step S1104: Yes), the information processing device 100 proceeds to processing in step S1106.

In step S1105, the information processing device 100 increments j (step S1105). The information processing device 100 returns to the processing in step S1103.

In step S1106, the information processing device 100 selects any one of all combinations of j = 1 to L and s = 1 to D_S (step S1106).

The information processing device 100 measures the local fidelity by the LLET, for the partial system state set {W_s^(L~,j) | 0>}, regarding the selected combination (step S1107).

The information processing device 100 determines whether or not all the combinations have been selected (step S1108). Here, in a case where any one of the combinations is not selected (step S1108: No), the information processing device 100 proceeds to processing in step S1109. On the other hand, in a case where all the combinations have been selected (step S1108: Yes), the information processing device 100 proceeds to processing in step S1110.

In step S1109, the information processing device 100 selects another combination (step S1109). The information processing device 100 returns to the processing in step S1107.

In step S1110, the information processing device 100 calculates the value of the partial system cost function C~_S^(L~) ($\Theta$), based on the measurement result (step S1110).

The information processing device 100 determines whether or not the value of the partial system cost function C~_S^(L~) ($\Theta$) is converged (step S1111). Here, in a case where the value of the partial system cost function C~_S^(L~) ($\Theta$) is not converged (step S1111: No), the information processing device 100 proceeds to processing in step S1112. On the other hand, in a case where the value of the partial system cost function C~_S^(L~) ($\Theta$) is converged (step S1111: Yes), the information processing device 100 sets the parameter $\theta$ as the optimum parameter $\theta$_opt and proceeds to processing in step S1113.

In step S1112, the information processing device 100 updates the parameter $\theta$ (step S1112). The information processing device 100 returns to the processing in step S1106.

In step S1113, the information processing device 100 implements the quantum circuit that expresses the time evolution operator with respect to the total system with the size L, based on the optimum parameter $\theta$_opt (step S1113). The information processing device 100 ends the overall processing.

(Localization Processing Procedure in First Example)

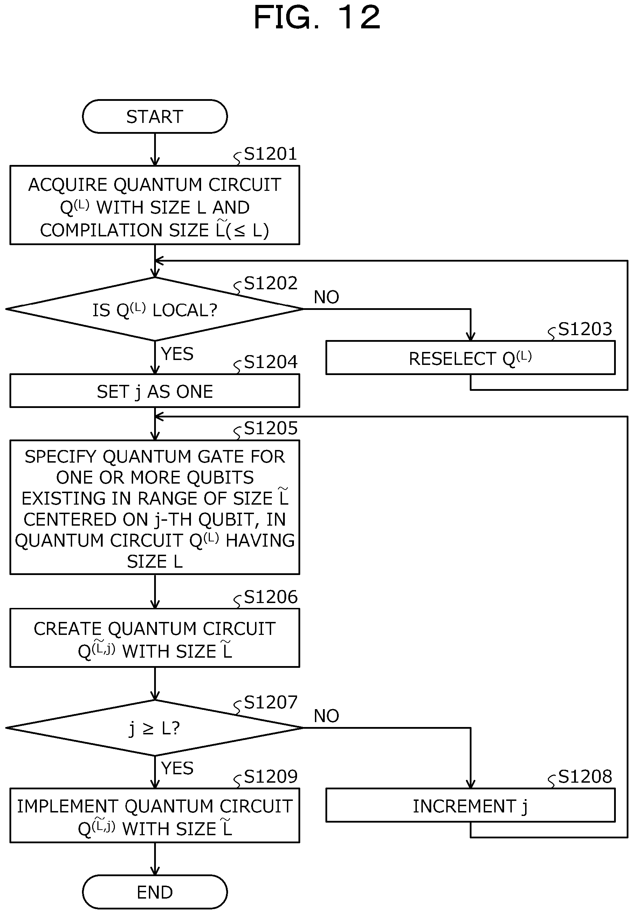

Next, an example of a localization processing procedure in the first example, executed by the information processing device 100 will be described, with reference to FIG. 12. The localization processing is implemented by, for example, the CPU 301, the storage region such as the memory 302 or the recording medium 305, and the network I/F 303 illustrated in FIG. 3.

FIG. 12 is a flowchart illustrating an example of the localization processing procedure in the first example. In FIG. 12, the information processing device 100 acquires the quantum circuit $Q^\wedge(L)$ with the size L and the compilation size L~ ($\leq$ L) (step S1201).

The information processing device 100 determines whether or not $Q^\wedge(L)$ is local (step S1202). Here, in a case where $Q^\wedge(L)$ is not local (step S1202: No), the information processing device 100 proceeds to processing in step S1203. On the other hand, in a case where $Q^\wedge(L)$ is local (step S1202: Yes), the information processing device 100 proceeds to processing in step S1204.

In step S1203, the information processing device 100 reselects $Q^\wedge(L)$ (step S1203). The information processing device 100 returns to the processing in step S1202.

In step S1204, the information processing device 100 sets j as one (step S1204).

The information processing device 100 specifies the quantum gate for one or more qubits existing in a range of the size L~ centered on the j-th qubit, in the quantum circuit $Q^\wedge(L)$ having the size L (step S1205). The information processing device 100 creates a quantum circuit $Q^\wedge(L\sim,j)$ with the size L~ including the specified quantum gate (step S1206).

The information processing device 100 determines whether or not $j \geq L$ (step S1207). Here, in a case where $j \geq L$ is not satisfied (step S1207: No), the information processing device 100 proceeds to processing in step S1208. On the other hand, in a case where $j \geq L$ (step S1207: Yes), the information processing device 100 proceeds to processing in step S1209.

In step S1208, the information processing device 100 increments j (step S1208). The information processing device 100 returns to the processing in step S1205.

In step S1209, the information processing device 100 implements the quantum circuit $Q^\wedge(L\sim,j)$ with the size L~ (step S1209). The information processing device 100 ends the localization processing.

(Second Example)

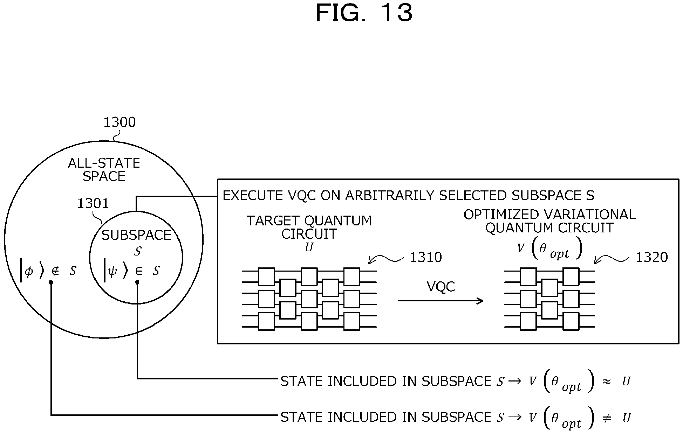

Next, a second example will be described with reference to FIGs. 13 to 20. The second example indicates a specific example in which the information processing device 100 sets a quantum circuit that expresses a predetermined action, so as to reduce the number of times of operations. FIGs. 13 to 20 are explanatory diagrams illustrating the second example.

Typically, as a method for creating the quantum circuit that expresses the predetermined action, there is Variational Quantum Compiling (VQC). Specifically, the VQC includes a Full Unitary Matrix Compiling (FUMC) method and a Fixed Input State Compiling (FISC) method.

The FUMC method is a method for minimizing the cost function so that actions of the target quantum circuit U and the variational quantum circuit V ($\Theta$) match with respect to all the quantum states belonging to the all-state space. The FISC method is a method for minimizing the cost function, so that the actions of the target quantum circuit U and the variational quantum circuit V ($\Theta$) match with respect to the specific quantum state. For example, about the FISC, Reference Literature 2 below can be referred.

Reference Literature 2: Gibbs, Joe, et al. "Long-time simulations for fixed input states on quantum hardware." npj Quantum Information 8.1 (2022): 135.

Here, in consideration of the physical properties of the molecules or the like, even if all the quantum states are not examined, if at least two or more quantum states that are a part of the all-state space are examined, there is a case where the accuracy of the specific calculation processing can be maintained. Therefore, a new method for minimizing the cost function is desired so that the actions of the target quantum circuit U and the variational quantum circuit V ($\Theta$) match, with respect to at least two or more quantum states that are a part of the all-state space. Here, description of FIG. 13 will be made.

In FIG. 13, specifically, the information processing device 100 minimizes the cost function, so that actions of a target quantum circuit 1310 (U) and a variational quantum circuit 1320 (V ($\theta$)) match with respect to a subspace 1301 including two or more quantum states, in an all-state space 1300. The target quantum circuit U expresses, for example, the predetermined action.

Specifically, the variational quantum circuit V ($\Theta$) approximates the target quantum circuit U, for a quantum state | $\psi$> belonging to the subspace 1301. On the other hand, the variational quantum circuit V ($\Theta$) does not approximate the target quantum circuit U, for a quantum state | $\varphi$> that does not belong to the subspace 1301. As a result, the information processing device 100 can update the variational quantum circuit V ($\Theta$) to be the quantum circuit that expresses the predetermined action and create the quantum circuit that expresses the predetermined action.

In the following description, a method for creating the quantum circuit that expresses the predetermined action by the information processing device 100 may be referred to as "Subspace Compiling (SC)". Here, a cost function that represents a difference between the target quantum circuit U and the variational quantum circuit V ($\Theta$), for the subspace S spanned by a basis B_S is defined by the following formula (21). The reference S is defined by the following formula (22). The reference B_S is defined by the following formula (23).

[Expression 21]

$$C_S^{\text{global}}(\boldsymbol{\theta}) = 1 - \frac{1}{D_S} \sum_{s=1}^{D_S} \left| \langle \psi_s | V^\dagger(\boldsymbol{\theta}) U | \psi_s \rangle \right|^2 \quad \dots (21)$$

[Expression 22]

$$S = \text{span}(B_S) \quad \dots (22)$$

[Expression 23]

$$B_S = \{|\psi_s\rangle\}_{s=1}^{s=D_S} \quad \dots (23)$$

The cost function described above indicates a result obtained by subtracting, from one, a value obtained by mean squaring a fidelity between two states U | $\psi$_s> and V ($\Theta$) | $\psi$_s>, with respect to D_S basis vectors | $\psi$_s>. Unlike the FISC method, the cost function described above averages the fidelity for the D_S quantum states different from each other, without using only a fidelity for the specific quantum state. Furthermore, the cost function described above can be applied to the subspace S spanned by the basis B_S.

The fact that the cost function described above is zero is a necessary and sufficient condition that the actions of U and V ($\Theta$) match, with respect to an arbitrary quantum state belonging to the subspace S. In other words, the following formula (24) is a necessary and sufficient condition for the following formula (25). It is preferable that the subspace S and the basis B_S be set according to nature of the problem. For example, in the quantum chemical calculation and the material physical property calculation, it is considered to set the subspace S corresponding to symmetry of a molecule or a solid material.

To the basis B_S spanning the subspace S, a combination of state vectors non-orthogonal to each other is set as a combination of the basis vectors | $\psi$_s>. In a case where the combination of the state vectors orthogonal to each other is set to the basis B_S spanning the subspace S, as indicated in the following formulas (24) and (25), a problem is caused that global phases are not aligned.

[Expression 24]

$$C_S^{\text{global}}(\boldsymbol{\theta}) = 0 \quad \dots (24)$$

[Expression 25]

$$V(\boldsymbol{\theta})|\psi\rangle = e^{i\phi} U |\psi\rangle \text{ for } \forall |\psi\rangle \in S \quad \dots (25)$$

It is preferable that a total number D_S of the basis vectors | $\psi$_s> spanning the subspace S be relatively small with respect to a dimension 2^L of the all-state space 1300. Therefore, in the following description, it is assumed that the SC be applied to the subspace S up to D_S = poly (L).

Specifically, the information processing device 100 acquires the target quantum circuit U that expresses the predetermined action, the variational quantum circuit V ($\Theta$), the basis {| $\psi$_s>} of the subspace, and a parameter $\alpha$ of the cost function. Specifically, the information processing device 100 prepares the quantum circuit for measuring the cost function. The quantum circuit for measuring the cost function will be described later with reference to FIG. 14.

Specifically, the information processing device 100 executes the Loschmidt echo test on the basis | $\psi$_s> (s = 1 to D_S) using the prepared quantum circuit and acquires a measurement result. Specifically, the information processing device 100 calculates a value of a cost function C_S ($\Theta$), based on the measurement result. Specifically, if the value of the cost function C_S ($\Theta$) is not converged, the information processing device 100 updates the parameter $\theta$, executes the

Loschmidt echo test again, and calculates the value of the cost function C_S (Θ).

Specifically, if the value of the cost function C_S (Θ) is converged, the information processing device 100 sets the parameter θ as the optimum parameter θ_opt. The information processing device 100 implements the variational quantum circuit V (Θ), to which the set optimum parameter θ_opt is set, as the quantum circuit that expresses the predetermined action. As a result, the information processing device 100 can implement the quantum circuit that expresses the predetermined action, so as to reduce the number of times of operations.

Next, a quantum circuit 1400 for measuring the cost function will be described with reference to FIG. 14. The quantum circuit 1400 includes a quantum gate 1401 corresponding to W_s. The quantum circuit 1400 includes a quantum gate 1402 corresponding to U. The quantum circuit 1400 includes a quantum gate 1403 corresponding to V^†. The quantum circuit 1400 includes a quantum gate 1404 corresponding to W_s^†. The quantum circuit 1400 includes a measurement unit 1405.

The information processing device 100 executes the Loschmidt echo test on the D_S basis vectors {| ψ_s>} and acquires the measurement result, by the quantum circuit 1400. The information processing device 100 measures the value of the cost function C_S (Θ), by averaging the measurement result. The basis vector | ψ_s> can be obtained by the following formula (26).

[Expression 26]

$$|\psi_s\rangle = W_s|0\rangle^{\otimes L} \quad ...(26)$$

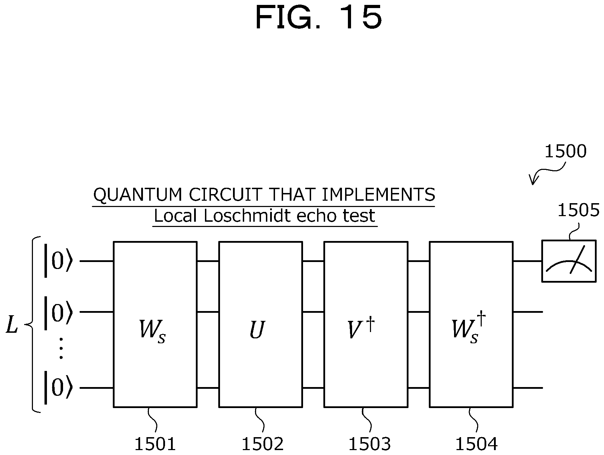

Next, a specific example in which the information processing device 100 minimizes the value of the cost function C_S (Θ) will be described with reference to FIG. 15. Here, in a case where a system size is relatively large, a gradient of a global cost function C_S^global (θ) exponentially increases. Therefore, a phenomenon in which efficiency of minimization deteriorates occurs. This phenomenon is called barren plateau. Therefore, in a case where the system size is relatively large, there is a case where it is preferable for the information processing device 100 to use a local cost function C_S^local (θ). The local cost function C_S^local (θ) is defined by the following formulas (27) and (28).

[Expression 27]

$$C_S^{\text{local}}(\boldsymbol{\theta}) = 1 - \frac{1}{LD_S}\sum_{j=1}^{L}\sum_{s=1}^{D_S}Tr\big[(|0\rangle\langle 0|_j \otimes I_{\bar{j}})\rho_s(U,V(\boldsymbol{\theta}))\big] \quad ...(27)$$

[Expression 28]

$$\rho_s(U,V(\boldsymbol{\theta})) = W_s^{\dagger}V^{\dagger}(\boldsymbol{\theta})U|\psi_s\rangle\langle\psi_s|U^{\dagger}V(\boldsymbol{\theta})W_s \quad ...(28)$$

Next, a quantum circuit 1500 for measuring the local cost function C_S^local (θ) will be described. The quantum circuit 1500 includes a quantum gate 1501 corresponding to W_s. The quantum circuit 1500 includes a quantum gate 1502 corresponding to U. The quantum circuit 1500 includes a quantum gate 1503 corresponding to V^†. The quantum circuit 1500 includes a quantum gate 1504 corresponding to W_s^†. The quantum circuit 1500 includes a measurement unit 1505.

The information processing device 100 executes the Loschmidt echo test on the D_S basis vectors {| ψ_s>} and acquires the measurement result, by the quantum circuit 1500. The information processing device 100 measures the value of the local cost function C_S^local (Θ), by averaging the measurement result. The fact that the local cost function C_S^local (Θ) is zero is a necessary and sufficient condition that the actions of U and V (Θ) match, with respect to an arbitrary quantum state belonging to the subspace S.

From above, it is considered that the information processing device 100 uses the cost function C_s (Θ), so as to conform with a size of the system size. The cost function C_s (Θ) is defined by the following formula (29). For example, in a case where the system size is relatively small, the information processing device 100 uses the global cost function C_S^global (Θ), while setting α = 1. For example, in a case where the system size increases to be relatively large, the information processing device 100 brings α to be closer to zero and strengthens a property of the local cost function C_S^local (Θ).

[Expression 29]

$$C_S(\boldsymbol{\theta}) = \alpha C_S^{\text{global}}(\boldsymbol{\theta}) + (1-\alpha)C_S^{\text{local}}(\boldsymbol{\theta}) \quad ...(29)$$

For example, the subspace S may be formed by setting a quantum state in which a Pauli gate defined by the following formula (30) is made to act, as the basis, with respect to a reference state |Ψ>. Orthogonality of the basis depends on a relationship between the reference state |Ψ> and the Pauli gate. On the other hand, if a basis in which the Pauli gate is replaced with a Pauli rotation gate is used, it is ensured that all the bases have a finite overlap with the reference state |Ψ>. Therefore, it is considered that the information processing device 100 non-orthogonalizes the basis, according to the following formulas (31) and (32).

[Expression 30]

$$\{\hat{P}_s|\Psi\rangle\}_{s=1}^{s=D_S} \quad \dots (30)$$

[Expression 31]

$$B_S = \left\{|\psi_s\rangle = e^{i\omega_s \hat{P}_s}|\Psi\rangle\right\}_{s=1}^{s=D_S} \quad \dots (31)$$

[Expression 32]

$$|\psi_s\rangle = e^{i\omega_s \hat{P}_s}|\Psi\rangle = \cos(\omega_s)|\Psi\rangle + i\sin(\omega_s)\hat{P}_s|\Psi\rangle \quad \dots (32)$$

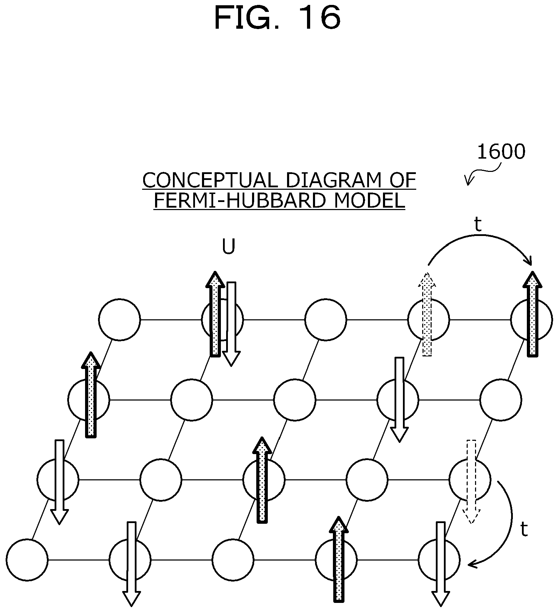

Next, an example in which the SC by the information processing device 100 is applied to physical quantity simulation of a Fermi-Hubbard model 1600 will be described with reference to FIG. 16. A Hamiltonian H corresponding to the Fermi-Hubbard model 1600 is defined by the following formulas (33) and (34). Here, c_io (c_io^†) is an annihilation (creation) operator for electrons of a site i and a spin σ. The reference U is an electronic correlation parameter. The reference t is a hopping parameter.

[Expression 33]

$$H = -t\sum_{\langle i,j\rangle}\sum_{\sigma=\uparrow,\downarrow}\left(c_{i\sigma}^{\dagger}c_{j\sigma} + c_{j\sigma}^{\dagger}c_{i\sigma}\right) + U\sum_{i=1}^{L} n_{i\uparrow}n_{i\downarrow} \quad \dots (33)$$

[Expression 34]

$$n_{i\sigma} = c_{i\sigma}^{\dagger}c_{i\sigma} \quad \dots (34)$$

The physical quantity is, for example, defined by a Green function. The Green function is, for example, defined by the following formula (35). The reference |Ψ> is a lowest energy state. The references a and b are labels of electrons. The reference τ is the time parameter. If a time evolution operator U = e^(- iHτ) can be implemented as a quantum circuit, the Green function can be calculated using the quantum computer.

[Expression 35]

$$G_{a,b}^{R}(\tau) = -i\langle\Psi|e^{iH\tau}c_a e^{-iH\tau}c_b^{\dagger} + c_b^{\dagger}e^{iH\tau}c_a e^{-iH\tau}|\Psi\rangle \ (\tau \geq 0) \quad \dots (35)$$

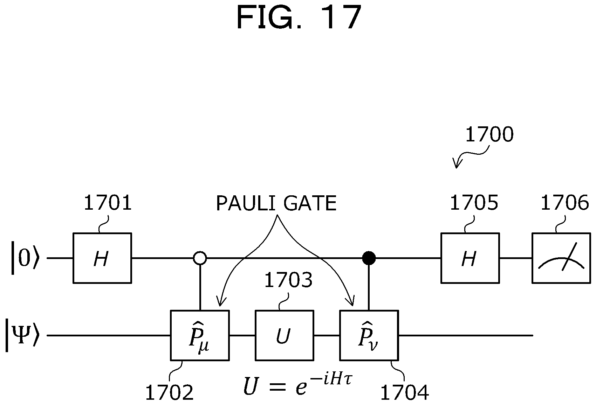

Next, an example of a quantum circuit 1700 that calculates the Green function will be described, with reference to FIG. 17. The quantum circuit 1700 includes an Hadamard gate 1701. The quantum circuit 1700 includes a Pauli gate 1702. The quantum circuit 1700 includes a quantum circuit 1703 that expresses the time evolution operator U = e^(- iHτ). The quantum circuit 1700 includes a Pauli gate 1704. The quantum circuit 1700 includes an Hadamard gate 1705. The quantum circuit 1700 includes a measurement unit 1706.

Hereinafter, it is assumed that the information processing device 100 implement the quantum circuit that expresses the time evolution operator U = e^(- 1Hτ), by the SC. In order to calculate the Green function, the information processing device 100 sets a subspace formed in a lowest energy state and an energy state in which one electron is created/annihilated in the lowest energy state. Specifically, the information processing device 100 sets the subspace according to the following formula (38) obtained by non-orthogonalizing the following formula (37) in which the following formula (36) is qubit-displayed. The basis indicated in the following formula (38) is non-orthogonal due to symmetry of the Fermi-Hubbard model 1600.

[Expression 36]

$$\{|\Psi\rangle\} \cup \left\{ c_{i\sigma}|\Psi\rangle, c_{i\sigma}^{\dagger}|\Psi\rangle \Big| i = 1,2,\cdots,L; \sigma = \uparrow, \downarrow \right\} \quad \ldots (36)$$

[Expression 37]

$$\{|\Psi\rangle\} \cup \left\{ P_{\mu}|\Psi\rangle \Big| \mu = 1,2,\cdots,4L \right\} \quad \ldots (37)$$

[Expression 38]

$$B_S = \{|\Psi\rangle\} \cup \left\{ e^{i\pi P_{\mu}/4}|\Psi\rangle \Big| \mu = 1,2,\cdots,4L \right\} \quad \ldots (38)$$

Specifically, the information processing device 100 sets the time evolution operator e^(- iHτ) of the Fermi-Hubbard model 1600, as the target quantum circuit U^(L), according to the Trotter decomposition method of the depth 100. Specifically, the information processing device 100 sets the VHA as the variational quantum circuit V^(L) (Θ). The VHA is defined by the following formulas (39) and (40).

[Expression 39]

$$V^{(L)}(\boldsymbol{\theta}) = \prod_{j=1}^{d_V} \prod_{m=1}^{M} e^{-i\theta_{j,m} H_m^{(L)}} \quad \ldots (39)$$

[Expression 40]

$$H = \sum_{m=1}^{M} H_m \quad ([H_m, H_{m'}] \neq 0 \; for \; m \neq m') \quad \ldots (40)$$

The information processing device 100 calculates the parameter θ that expresses the action of the time evolution operator, based on the set target quantum circuit U^(L) and the set variational quantum circuit V^(L) (Θ). The information processing device 100 implements the variational quantum circuit V^(L) (Θ), to which the parameter θ is set, as the quantum circuit that expresses the action of the time evolution operator. As a result, the information processing device 100 can implement the VHA that is the quantum circuit that expresses the action of the time evolution operator, so as to reduce the number of times of operations.

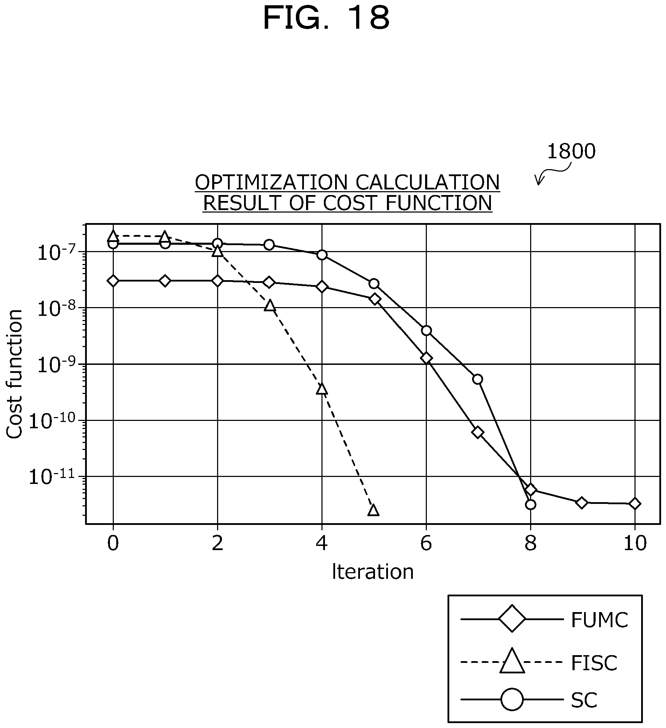

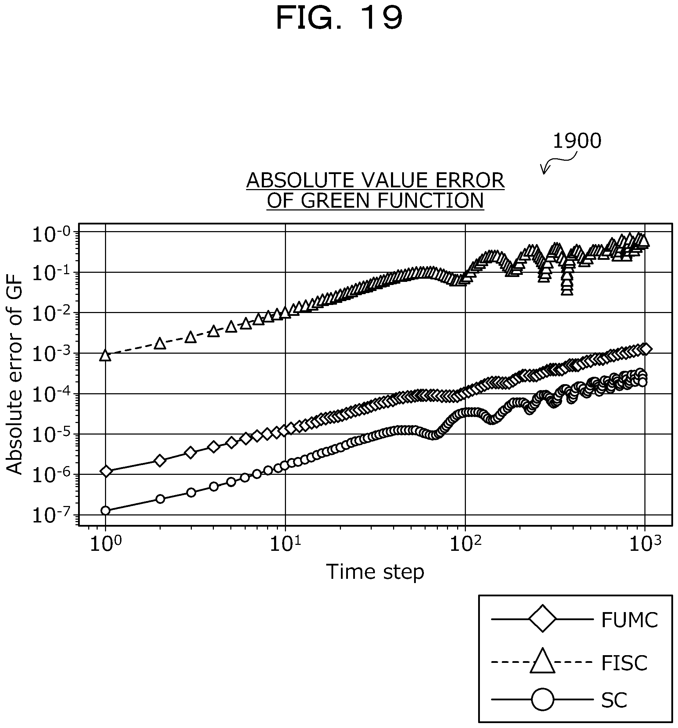

Next, an example of the effect of the information processing device 100 will be described with reference to FIGs. 18 and 19. It is assumed that the information processing device 100 implement the VHA by the SC. Here, convergence speeds in a case where the cost function is minimized by the SC, the FUMC method, and the FISC method will be described. A graph 1800 illustrates a change in a value of a cost function with respect to the number of iterations, in a case where the cost function is minimized. As illustrated in the graph 1800, the SC can increase the convergence speed as compared with the FUMC method. Next, description of FIG. 19 will be made.

A graph 1900 in FIG. 19 illustrates results of calculating time dependency of the Green function and evaluating an absolute value error for an exact solution by the SC, the FUMC method, and the FISC method. A vertical axis of the graph 1900 is an absolute value error. A horizontal axis of the graph 1900 is a time step. As illustrated in the graph 1900, at all times, the SC can more accurately calculate the Green function, than the FUMC method and the FISC method.

As a result, the SC can obtain a quantum gate suitable for an object for calculating the Green function, without increasing the number of quantum gates of the quantum circuit that expresses the action of the time evolution operator, as compared with the FUMC method and the FISC method.

In this way, the information processing device 100 can obtain the quantum circuit that expresses the predetermined action and that enables to efficiently execute the quantum calculation by the quantum computer, by the SC. The information processing device 100 can reduce the number of quantum gates prepared for the quantum calculation regarding the specific problem and the depth of the quantum circuit, by the SC. The information processing device 100 can enable to efficiently execute the quantum calculation regarding the specific calculation processing such as the quantum chemical calculation or the material physical property calculation.

For example, the information processing device 100 can improve approximation accuracy of the Fermi-Hubbard model 1600 for the Green function to 10 times of that of the FUMC method. Therefore, in a case of ensuring the approximation accuracy about the same as that of the FUMC method by the SC, the information processing device 100 can reduce the number of quantum gates for forming the quantum circuit that expresses the predetermined action, as compared with the FUMC method.

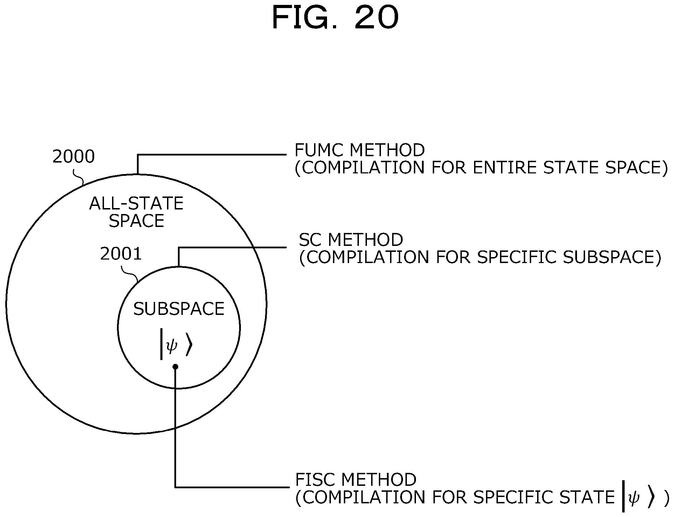

Next, a difference between the SC, the FUMC method, and the FISC method will be described with reference to FIG. 20. As illustrated in FIG. 20, the SC implements a compilation for a subspace 2001, in an all-state space 2000. On the other hand, the FUMC method implements a compilation for the all-state space 2000. Furthermore, the FISC method implements the compilation only for a specific quantum state $| \psi>$, of the all-state space 2000.

The SC can create the quantum circuit that more accurately expresses the predetermined action with respect to the subspace 2001 in a wide range, as compared with the FISC method. The SC can reduce the number of qubits of the quantum circuit to be used to measure the cost function, as compared with the FUMC method.

(Overall Processing Procedure in Second Example)

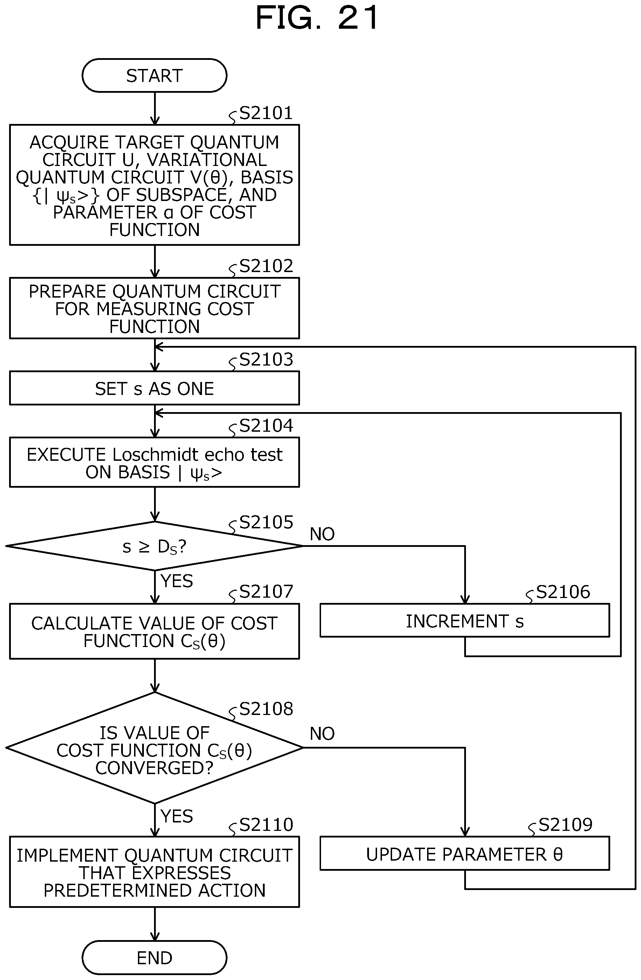

Next, an example of an overall processing procedure in the second example executed by the information processing device 100 will be described with reference to FIG. 21. The overall processing is implemented by, for example, the CPU 301, the storage region such as the memory 302 or the recording medium 305, and the network I/F 303 illustrated in FIG. 3.

FIG. 21 is a flowchart illustrating an example of the overall processing procedure in the second example. In FIG. 21, the information processing device 100 acquires the target quantum circuit U, the variational quantum circuit V ($\Theta$), the basis $\{| \psi\_s>\}$ of the subspace, and the parameter $\alpha$ of the cost function (step S2101).

The information processing device 100 prepares the quantum circuit for measuring the cost function (step S2102). The information processing device 100 sets s as one (step S2103). The information processing device 100 executes the Loschmidt echo test on the basis $| \psi\_s>$, using the prepared quantum circuit (step S2104).

The information processing device 100 determines whether or not s ≥ D_S (step S2105). Here, in a case where s ≥ D_S is not satisfied (step S2105: No), the information processing device 100 proceeds to processing in step S2106. On the other hand, in a case where s ≥ D_S (step S2105: Yes), the information processing device 100 proceeds to processing in step S2107.

In step S2106, the information processing device 100 increments s (step S2106). The information processing device 100 returns to the processing in step S2104.

In step S2107, the information processing device 100 calculates the value of the cost function C_S ($\Theta$), based on the measurement result (step S2107).

The information processing device 100 determines whether or not the value of the cost function C_S ($\Theta$) is converged (step S2108). Here, in a case where the value of the cost function C_S ($\Theta$) is not converged (step S2108: No), the information processing device 100 proceeds to processing in step S2109.

In step S2109, the information processing device 100 updates the parameter $\theta$ (step S2109) and returns to the processing in step S2103. On the other hand, in a case where the value of the cost function C_S ($\Theta$) is converged (step S2108: Yes), the information processing device 100 implements the quantum circuit that expresses the predetermined action, based on the parameter $\theta$ (step S2110), and ends the overall processing.

As described above, according to the information processing device 100, it is possible to acquire the first quantum circuit that expresses the action of the time evolution operator regarding the target problem, having the first size. According to the information processing device 100, it is possible to acquire the second quantum circuit, having the first size, that has a smaller number of quantum gates than the first quantum circuit and includes the plurality of parameters. According to the information processing device 100, it is possible to acquire the third quantum circuit, having the first size, that defines the one or more quantum states that are a part of the plurality of quantum states regarding the target problem. According to the information processing device 100, it is possible to create the first local circuit, the second local circuit, and the third local circuit, each having the second size, by respectively reducing the sizes of the first quantum circuit, the second quantum circuit, and the third quantum circuit to the second size that is smaller than the first size. According to the information processing device 100, it is possible to set the cost function that is defined by the created third local circuit, sets the plurality of parameters as the explanatory variables, and indicates the difference between the created first local circuit and second local circuit. According to the information processing device 100, it is possible to calculate the solutions of the plurality of parameters, so as to minimize the value of the cost function, for each of the one or more quantum states, based on the cost function. According to the information processing device 100, it is possible to set the new quantum circuit that expresses the action of the time evolution operator, based on the second quantum circuit and the calculated solutions of the plurality of parameters. As a result, the information processing device 100 can set the quantum circuit that expresses the action of the time evolution operator, so as to reduce the number of times of operations and reduce the number of quantum gates. The information processing device 100 can suppress the deterioration in the accuracy of the quantum calculation using the quantum circuit that expresses the action of the time evolution operator. The information processing device 100 can reduce the processing time required for the quantum calculation using the quantum circuit that expresses the action of the time evolution operator.

According to the information processing device 100, it is possible to acquire the first quantum circuit, by creating the first quantum circuit according to the Trotter decomposition method. As a result, the information processing device 100 can set the quantum circuit that expresses the action of the time evolution operator, without acquiring the first quantum circuit from outside. The information processing device 100 can create an appropriate first quantum circuit as a sample and can easily set the quantum circuit that accurately expresses the action of the time evolution operator.

According to the information processing device 100, it is possible to set the cost function defined by the local fidelity measured for the third local circuit. As a result, the information processing device 100 can appropriately set the cost function and can easily set the quantum circuit that accurately expresses the action of the time evolution operator.

According to the information processing device 100, it is possible to reduce the size of each of the acquired first quantum circuit, second quantum circuit, and third quantum circuit to the second size that is the predetermined range, with reference to each qubit, for each of the plurality of qubits. According to the information processing device 100, it is possible to create the plurality of combinations of the first local circuit, the second local circuit, and the third local circuit. According to the information processing device 100, it is possible to calculate the solutions of the plurality of parameters, so as to minimize the value of the cost function, for each of the one or more quantum states, based on the cost function corresponding to the plurality of combinations. As a result, the information processing device 100 can consider the second size that is the predetermined range with reference to each qubit, can appropriately set the cost function, and can easily set the quantum circuit that accurately expresses the action of the time evolution operator.

According to the information processing device 100, it is possible to reduce the size of each of the acquired first quantum circuit, second quantum circuit, and third quantum circuit to the second size that is the predetermined range with reference to any one of the qubits. As a result, in a case where each of the first quantum circuit, the second quantum circuit, and the third quantum circuit has the translation symmetry, the information processing device 100 can reduce the processing amount required when the quantum circuit that expresses the action of the time evolution operator is set.

According to the information processing device 100, it is possible to acquire the third quantum circuit that defines the one or more quantum states that are linearly independent from and non-orthogonal to each other. As a result, the information processing device 100 can acquire the third quantum circuit that expresses an appropriate subspace.

According to the information processing device 100, it is possible to acquire the first quantum circuit that expresses the predetermined action regarding the target problem. According to the information processing device 100, it is possible to acquire the second quantum circuit that has the smaller number of quantum gates than the first quantum circuit and includes the plurality of parameters. According to the information processing device 100, it is possible to acquire the basis vector group that defines the two or more quantum states that are a part of the plurality of quantum states regarding the target problem. According to the information processing device 100, it is possible to set the cost function that is defined by the acquired basis vector group, sets the plurality of parameters as the explanatory variables, and represents the difference between the acquired first quantum circuit and second quantum circuit. According to the information processing device 100, it is possible to calculate the solutions of the plurality of parameters, so as to minimize the value of the cost function, for each of the two or more quantum states, based on the cost function. According to the information processing device 100, it is possible to set the new quantum circuit that expresses the predetermined action, based on the second quantum circuit and the calculated solutions of the plurality of parameters. As a result, the information processing device 100 can set the quantum circuit that expresses the predetermined action, so as to reduce the number of times of operations and reduce the number of quantum gates. The information processing device 100 can suppress the deterioration in the accuracy of the quantum calculation using the quantum circuit that expresses the predetermined action. The information processing device 100 can reduce the processing time required for the quantum calculation using the quantum circuit that expresses the predetermined action.

Note that the information processing method described in the present embodiment may be implemented by executing a program prepared in advance in a computer such as a PC or a workstation. The information processing program described in the present embodiment is recorded in a computer-readable recording medium, and is read from the recording medium by a computer to execute the program. The recording medium is a hard disk, a flexible disk, a Compact Disc (CD)-ROM, a Magneto Optical disc (MO), a Digital Versatile Disc (DVD), or the like.

Furthermore, the information processing program described in the present embodiment may be distributed via a network such as the Internet.

**Claims**

1. An information processing program comprising instructions which, when executed by a computer, cause the computer to execute processing comprising:

acquiring a first quantum circuit that expresses an action of a time evolution operator regarding a target problem, a second quantum circuit that has a smaller number of quantum gates than the first quantum circuit and includes a plurality of parameters, and a third quantum circuit that defines one or more quantum states that are a part of a plurality of quantum states regarding the target problem, in which each of the first quantum circuit, the second quantum circuit, and the third quantum circuit has a first size;

creating a first local circuit, a second local circuit, and a third local circuit, each of which has a second size, by respectively reducing sizes of the acquired first quantum circuit, second quantum circuit, and third quantum circuit to the second size smaller than the first size;

calculating solutions of the plurality of parameters, so as to minimize a value of a cost function for each of the one or more quantum states, based on the cost function that is defined by the created third local circuit, sets the plurality of parameters as explanatory variables, and represents a difference between the created first local circuit and second local circuit; and

setting a new quantum circuit that expresses the action of the time evolution operator, based on the second quantum circuit and the calculated solutions of the plurality of parameters.

2. The information processing program according to claim 1, wherein

the acquiring includes
acquiring the first quantum circuit, by creating the first quantum circuit according to a Trotter decomposition method.

3. The information processing program according to claim 1, wherein the cost function is defined by a local fidelity measured for the third local circuit.

4. The information processing program according to claim 1, wherein

the first size is
a range that includes all of a plurality of qubits regarding the target problem,
the second size is
a range that includes a part of the plurality of qubits,
the creating includes
creating a plurality of combinations of the first local circuit, the second local circuit, and the third local circuit, by reducing the size of each of the acquired first quantum circuit, second quantum circuit, and third quantum circuit to the second size that is a predetermined range with reference to the qubit, for each of the plurality of qubits, and
the calculating includes
calculating the solutions of the plurality of parameters, so as to minimize the value of the cost function, for each of the one or more quantum states, based on the cost function that corresponds to the plurality of combinations.

5. The information processing program according to claim 1, wherein

the creating includes
creating a first local circuit, a second local circuit, and a third local circuit, each of which has the second size, by respectively reducing the sizes of the acquired first quantum circuit, second quantum circuit, and third quantum circuit to the second size that is a predetermined range with reference to any one of the qubits, for any one of the plurality of qubits regarding the target problem, in a case where each of the first quantum circuit, the second quantum circuit, and the third quantum circuit has translation symmetry.

6. An information processing method comprising:

acquiring a first quantum circuit that expresses an action of a time evolution operator regarding a target problem, a second quantum circuit that has a smaller number of quantum gates than the first quantum circuit and includes a plurality of parameters, and a third quantum circuit that defines one or more quantum states that are a part of a plurality of quantum states regarding the target problem, in which each of the first quantum circuit, the second quantum circuit, and the third quantum circuit has a first size;

creating a first local circuit, a second local circuit, and a third local circuit, each of which has a second size, by respectively reducing sizes of the acquired first quantum circuit, second quantum circuit, and third quantum circuit to the second size smaller than the first size;

calculating solutions of the plurality of parameters, so as to minimize a value of a cost function for each of the one or more quantum states, based on the cost function that is defined by the created third local circuit, sets the plurality of parameters as explanatory variables, and represents a difference between the created first local circuit and second local circuit; and

setting a new quantum circuit that expresses the action of the time evolution operator, based on the second quantum circuit and the calculated solutions of the plurality of parameters.

7. An information processing apparatus comprising a control unit configured to perform processing including:

acquiring a first quantum circuit that expresses an action of a time evolution operator regarding a target problem, a second quantum circuit that has a smaller number of quantum gates than the first quantum circuit and includes a plurality of parameters, and a third quantum circuit that defines one or more quantum states that are a part of a plurality of quantum states regarding the target problem, in which each of the first quantum circuit, the second quantum circuit, and the third quantum circuit has a first size;

creating a first local circuit, a second local circuit, and a third local circuit, each of which has a second size, by respectively reducing sizes of the acquired first quantum circuit, second quantum circuit, and third quantum circuit to the second size smaller than the first size;

calculating solutions of the plurality of parameters, so as to minimize a value of a cost function for each of the one or more quantum states, based on the cost function that is defined by the created third local circuit, sets the plurality of parameters as explanatory variables, and represents a difference between the created first local circuit and second local circuit; and

setting a new quantum circuit that expresses the action of the time evolution operator, based on the second quantum circuit and the calculated solutions of the plurality of parameters.

8. An information processing program comprising instructions which, when executed by a computer, cause the computer to execute processing comprising:

acquiring a first quantum circuit that expresses a predetermined action regarding a target problem, a second quantum circuit that has a smaller number of quantum gates than the first quantum circuit and includes a plurality of parameters, and a basis vector group that defines two or more quantum states that are a part of a plurality of quantum states regarding the target problem;

calculating solutions of the plurality of parameters, so as to minimize a value of a cost function for each of the two or more quantum states, based on the cost function that is defined by the acquired basis vector group, sets the plurality of parameters as explanatory variables, and represents a difference between the acquired first quantum circuit and second quantum circuit; and

setting a new quantum circuit that expresses the predetermined action, based on the second quantum circuit and the calculated solutions of the plurality of parameters.

9. An information processing method comprising:

acquiring a first quantum circuit that expresses a predetermined action regarding a target problem, a second quantum circuit that has a smaller number of quantum gates than the first quantum circuit and includes a plurality of parameters, and a basis vector group that defines two or more quantum states that are a part of a plurality of quantum states regarding the target problem;

calculating solutions of the plurality of parameters, so as to minimize a value of a cost function for each of the two or more quantum states, based on the cost function that is defined by the acquired basis vector group, sets the plurality of parameters as explanatory variables, and represents a difference between the acquired first quantum circuit and second quantum circuit; and

setting a new quantum circuit that expresses the predetermined action, based on the second quantum circuit and the calculated solutions of the plurality of parameters.

10. An information processing apparatus comprising a control unit configured to perform processing including:

acquiring a first quantum circuit that expresses a predetermined action regarding a target problem, a second quantum circuit that has a smaller number of quantum gates than the first quantum circuit and includes a plurality of parameters, and a basis vector group that defines two or more quantum states that are a part of a plurality of quantum states regarding the target problem;

calculating solutions of the plurality of parameters, so as to minimize a value of a cost function for each of the two or more quantum states, based on the cost function that is defined by the acquired basis vector group, sets the plurality of parameters as explanatory variables, and represents a difference between the acquired first quantum circuit and second quantum circuit; and

setting a new quantum circuit that expresses the predetermined action, based on the second quantum circuit and the calculated solutions of the plurality of parameters.

# FIG. 1

100

EXPRESS ACTION OF TIME
EVOLUTION OPERATOR

101
FIRST QUANTUM
CIRCUIT

→

111
FIRST LOCAL
CIRCUIT

THE NUMBER OF QUANTUM
GATES IS RELATIVELY SMALL

102
SECOND QUANTUM
CIRCUIT

→

112
SECOND LOCAL
CIRCUIT

DEFINE PART OF
QUANTUM STATES

103
THIRD QUANTUM
CIRCUIT

→

113
THIRD LOCAL
CIRCUIT

121
SUBSPACE

120

ALL-STATE
SPACE

130

111
FIRST LOCAL
CIRCUIT

AND

112
SECOND LOCAL
CIRCUIT

COST FUNCTION REPRESENTING
DIFFERENCE BETWEEN FIRST
LOCAL CIRCUIT AND SECOND
LOCAL CIRCUIT

DETERMINE PLURALITY OF PARAMETERS OF
SECOND QUANTUM CIRCUIT FOR MINIMIZATION

# FIG. 2

# FIG. 3

# FIG. 4

FIG. 5

# FIG. 6

SMALL QUANTUM COMPUTER or
CLASSICAL COMPUTER

DESIGN QUANTUM CIRCUIT THAT APPROXIMATES TIME EVOLUTION OPERATOR OF SMALL COMPONENT SYSTEM THROUGH OPTIMIZATION CALCULATION

$\theta_{opt}$

PARAMETER $\theta_{opt}$ FOR QUANTUM CIRCUIT DESIGN

LARGE QUANTUM COMPUTER

IMPLEMENT TIME EVOLUTION OPERATOR OF LARGE-SCALE QUANTUM MANY-BODY SYSTEM FOR WHICH IT IS DIFFICULT TO PERFORM OPTIMIZATION CALCULATION

$\theta_{opt}$

ALL-STATE SPACE

SUBSPACE $S$

# FIG. 7

# FIG. 8

800

QUANTUM CIRCUIT THAT IMPLEMENTS LOCAL
FIDELITY MEASUREMENT BY LLET

$\tilde{L}$

$W_s^{(\tilde{L},j)}$

$U^{(\tilde{L},j)}$

$V^{(\tilde{L},j)\dagger}$

$W_s^{(\tilde{L},j)\dagger}$

805

801      802      803      804

# FIG. 9

CONCEPTUAL DIAGRAM OF
ONE-DIMENSIONAL Fermi-Hubbard MODEL

900

# FIG. 10

# FIG. 11

START

**S1101**

ACQUIRE TARGET QUANTUM CIRCUIT $U^{(L)}$, VARIATIONAL QUANTUM CIRCUIT $V^{(L)}(\theta)$, STATE PREPARATION CIRCUIT $\{W_s^{(L)}\}(s = 1\ TO\ D_S)$, AND COMPILATION SIZE $\tilde{L}(\leq L)$

**S1102**

SET j AS ONE

**S1103**

EXECUTE LOCALIZATION PROCESSING ON TARGET QUANTUM CIRCUIT $U^{(L)}$, VARIATIONAL QUANTUM CIRCUIT $V^{(L)}(\theta)$, AND STATE PREPARATION CIRCUIT $\{W_s^{(L)}\}(s = 1\ TO\ D_S)$

**S1104** — $j \geq L$? — NO

YES

**S1105** INCREMENT j

**S1106** SELECT ANY ONE OF ALL COMBINATIONS OF j = 1 TO L AND s = 1 TO $D_S$

**S1107** MEASURE LOCAL FIDELITY BY LLET, FOR PARTIAL SYSTEM STATE SET $\{W_s^{(\tilde{L},j)} \mid 0 >\}$

**S1108** HAVE ALL COMBINATIONS BEEN SELECTED? — NO

**S1109** SELECT ANOTHER COMBINATION

YES

**S1110** CALCULATE VALUE OF PARTIAL SYSTEM COST FUNCTION $\tilde{C}_s^{(\tilde{L})}(\theta)$

**S1111** WHETHER OR NOT VALUE OF PARTIAL SYSTEM COST FUNCTION $\tilde{C}_s^{(\tilde{L})}(\theta)$ IS CONVERGED? — NO

**S1112** UPDATE PARAMETER $\theta$

YES

**S1113** IMPLEMENT QUANTUM CIRCUIT THAT EXPRESSES TIME EVOLUTION OPERATOR WITH RESPECT TO TOTAL SYSTEM WITH SIZE L

END

# FIG. 12

START

$\varsigma$S1201

ACQUIRE QUANTUM CIRCUIT $Q^{(L)}$ WITH SIZE L AND COMPILATION SIZE $\tilde{L}(\leq L)$

$\varsigma$S1202

IS $Q^{(L)}$ LOCAL? — NO → $\varsigma$S1203 RESELECT $Q^{(L)}$

YES

$\varsigma$S1204 SET j AS ONE

$\varsigma$S1205

SPECIFY QUANTUM GATE FOR ONE OR MORE QUBITS EXISTING IN RANGE OF SIZE $\tilde{L}$ CENTERED ON j-TH QUBIT, IN QUANTUM CIRCUIT $Q^{(L)}$ HAVING SIZE L

$\varsigma$S1206 CREATE QUANTUM CIRCUIT $Q^{(\tilde{L},j)}$ WITH SIZE $\tilde{L}$

$\varsigma$S1207 $j \geq L$? — NO → $\varsigma$S1208 INCREMENT j

YES

$\varsigma$S1209 IMPLEMENT QUANTUM CIRCUIT $Q^{(\tilde{L},j)}$ WITH SIZE $\tilde{L}$

END

# FIG. 13

1300

ALL-STATE
SPACE

1301

SUBSPACE
$S$

$|\phi\rangle \notin S$  $|\psi\rangle \in S$

EXECUTE VQC ON ARBITRARILY SELECTED SUBSPACE S

TARGET QUANTUM
CIRCUIT
$U$

~ 1310

VQC →

OPTIMIZED VARIATIONAL
QUANTUM CIRCUIT
$V\left(\theta_{opt}\right)$

~ 1320

STATE INCLUDED IN SUBSPACE $S \rightarrow V\left(\theta_{opt}\right) \approx U$

STATE INCLUDED IN SUBSPACE $S \rightarrow V\left(\theta_{opt}\right) \neq U$

# FIG. 14

QUANTUM CIRCUIT THAT IMPLEMENTS Loschmidt echo test

# FIG. 15

QUANTUM CIRCUIT THAT IMPLEMENTS
Local Loschmidt echo test

# FIG. 16

CONCEPTUAL DIAGRAM OF
FERMI-HUBBARD MODEL

1600

# FIG. 17

$$U = e^{-iH\tau}$$

# FIG. 18

OPTIMIZATION CALCULATION
RESULT OF COST FUNCTION

1800

Legend: FUMC (diamond), FISC (triangle, dashed), SC (circle)

# FIG. 19

1900

ABSOLUTE VALUE ERROR
OF GREEN FUNCTION

# FIG. 20

2000

ALL-STATE
SPACE

—— FUMC METHOD
(COMPILATION FOR ENTIRE STATE SPACE)

2001

SUBSPACE

$|\psi\rangle$

SC METHOD
(COMPILATION FOR SPECIFIC SUBSPACE)

FISC METHOD
(COMPILATION FOR SPECIFIC STATE $|\psi\rangle$ )

# FIG. 21

START

S2101

ACQUIRE TARGET QUANTUM CIRCUIT U, VARIATIONAL QUANTUM CIRCUIT $V(\theta)$, BASIS $\{|\psi_s>\}$ OF SUBSPACE, AND PARAMETER $\alpha$ OF COST FUNCTION

S2102

PREPARE QUANTUM CIRCUIT FOR MEASURING COST FUNCTION

S2103

SET s AS ONE

S2104

EXECUTE Loschmidt echo test ON BASIS $|\psi_s>$

S2105

$s \geq D_S$?  —NO→

S2106

INCREMENT s

YES

S2107

CALCULATE VALUE OF COST FUNCTION $C_S(\theta)$

S2108

IS VALUE OF COST FUNCTION $C_S(\theta)$ CONVERGED?  —NO→

S2109

UPDATE PARAMETER $\theta$

YES

S2110

IMPLEMENT QUANTUM CIRCUIT THAT EXPRESSES PREDETERMINED ACTION

END

Europäisches
Patentamt

European
Patent Office

Office européen
des brevets

# EUROPEAN SEARCH REPORT

**Application Number**

EP 24 22 0098

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | MIZUTA KAORU ET AL: "Local Variational Quantum Compilation of Large-Scale Hamiltonian Dynamics", PRX QUANTUM, vol. 3, no. 4, 29 March 2022 (2022-03-29), XP093276384, ISSN: 2691-3399, DOI: 10.1103/PRXQuantum.3.040302 Retrieved from the Internet: URL:https://arxiv.org/pdf/2203.15484> * page 1 - page 12 * ----- | 1-10 | INV. G06N10/60 G06N10/20 |

TECHNICAL FIELDS
SEARCHED      (IPC)

G06N
G06F

The present search report has been drawn up for all claims

| Place of search | Date of completion of the search | Examiner |
|---|---|---|
| The Hague | 14 May 2025 | Bohn, Patrice |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022510394 A
- WO 2022039183 A
- US 20180053112
- US 20200293936

**Non-patent literature cited in the description**

- **MIZUTA, KAORU et al.** Local variational quantum compilation of large-scale hamiltonian dynamics. *PRX Quantum*, 2022, vol. 3.4, 040302
- **GIBBS, JOE et al.** Long-time simulations for fixed input states on quantum hardware. *npj Quantum Information*, 2022, vol. 8.1, 135